# EUROPÄISCHE PATENTSCHRIFT

(11) **EP 3 408 561 B1**
(45) Veröffentlichungstag und Bekanntmachung des Hinweises auf die Patenterteilung: **15.07.2020**
(21) Anmeldenummer: 17701876.9
(22) Anmeldetag: 27.01.2017
(51) Int. Cl.: F16G 13/16, H02G 3/04

(54) **LEITUNGSFUEHRUNGSEINRICHTUNG MIT ELEKTROTECHNISCHER VERSCHLEISSERKENNUNG UND FUNKSCHALTUNG HIERFUER**
LINE GUIDE DEVICE WITH ELECTRICAL WEAR IDENTIFICATION AND RADIO CIRCUIT THEREFOR
DISPOSITIF DE GUIDAGE DE CONDUITE OU DE LIGNE A DETECTION D'USURE ELECTROTECHNIQUE ET CIRCUIT RADIO A CET EFFET

(30) Priorität: 28.01.2016 DE 202016000501 U; 21.04.2016 DE 202016102134 U
(43) Veröffentlichungstag der Anmeldung: 05.12.2018
(73) Patentinhaber: Igus GmbH, 51147 Köln (DE)
(72) Erfinder: HERMEY, Andreas, 53773 Hennef (DE); BARTEN, Dominik, 53340 Meckenheim (DE); JAEKER, Thilo-Alexander, 53757 Sankt Augustin (DE); SCHMER, Konstantin, 50827 Köln (DE)
(74) Vertreter: Lippert Stachow Patentanwälte Rechtsanwälte
(86) Internationale Anmeldenummer: PCT/EP2017/051870
(87) Internationale Veröffentlichungsnummer: WO 2017/129805

(56) Entgegenhaltungen:
- EP-A1- 0 173 635
- EP-A2- 1 521 015
- DE-C1- 4 444 264
- DE-U1- 20 312 266
- DE-U1-202012 003 907

## Beschreibung

Die Erfindung betrifft ganz allgemein aktive Leitungsführungen mit einer elektrotechnischen Verschleißerkennung (Engl. electrical detection of deterioration). Sie betrifft insbesondere Energieführungsketten aus Kunststoff gemäß dem Gegenstand des unabhängigen Anspruchs 1. Des Weiteren betrifft die Erfindung auch ein Erkennungsmodul zum Aus- bzw. Nachrüsten einer Energieführungskette mit elektronischer Verschleißerkennung gemäß dem Gegenstand des unabhängigen Anspruchs 12 und eine Verwendung des Erkennungsmoduls zur elektrotechnischen Erkennung von Verschleiß in einem kritischen Bereich einer verfahrbaren Leitungsführung gemäß dem Gegenstand des unabhängigen Anspruchs 15.

Gattungsgemäße dynamische Leitungsführungen dienen bekanntermaßen zum geschützten Führen mindestens einer Leitung zwischen einem festen und einem dazu beweglichen Anschlusspunkt. Typischerweise nimmt die Leitungsführung mehrere verschiedenartige Leitungen auf. Ein weit verbreitetes Beispiel sind sog. Energieführungsketten. Energieführungsketten bestehen aus einer Anzahl Kettengliedern mit gegenüberliegenden Seitenlaschen, von denen zumindest einige über einem oder zwei Querstege miteinander verbunden sind und typischerweise zueinander parallel gehalten werden. Im Querschnitt bilden sie so einen Kanal zur Führung der Kabel, Schläuche oder dergleichen im Inneren der Kettenglieder. Die benachbarten Kettenglieder sind jeweils paarweise in Längsrichtung gelenkig miteinander verbunden.

Die einzelnen Kettenglieder können aus mehreren Einzelteilen aus Kunststoff zusammengesetzt sein, wie beispielsweise in den Patenten DE 3531066 C2 oder EP 0 803 032 B1 beschrieben. Die Kettenglieder können auch aus einem Stück hergestellt sein. In einer häufigen Ausführungsform sind die benachbarten Seitenlaschen durch Drehgelenke schwenkbar miteinander verbunden, beispielsweise vom Typ Bolzen/Bohrung, und können so bis zu einem vorgegebenen Maximalwinkel zueinander verschwenkt bzw. abgewinkelt werden.

Bei einem weiteren Beispiel einer gattungsgemäßen Energieführungskette aus Kunststoffteilen sind die einzelnen Kettenglieder durch elastisch biegsame Gelenkelemente gelenkig miteinander verbunden, wie im Patent EP 1 381 792 B1 offenbart.

In einer alternativen Ausführung gattungsgemäßer Leitungsführungen können anstatt gelenkig miteinander verbundener Kettenglieder zumindest abschnittsweise einstückig hergestellte Segmente flexibel miteinander verbunden sein. Derartige Leitungsführungseinheiten, bei denen benachbarte Segmente durch eine filmscharnierartige Verbindung in Längsrichtung miteinander flexibel verbunden und relativ zueinander abwinkelbar sind, sind beispielsweise aus den Patentanmeldungen WO 98/48645 A1 oder WO 90/41284 A1 oder auch aus dem Patent US 3,473,769 vorbekannt. Derartige ganz oder in Teilen einstückig aus Kunststoff herstellbare Leitungsführungseinheiten sind insbesondere für weniger anspruchsvolle Anwendungen mit kurzer Führungslänge und/oder zur kostengünstigen Herstellung in Großserien geeignet.

Bei gattungsgemäßen Leitungsführungen, insbesondere Energieführungsketten oder abschnittsweise einstückigen Leitungsführungseinheiten kann nach Überschreiten der vorgesehenen Lebensdauer aufgrund übermäßiger Abnutzung oder auch bei unsachgemäßer Verwendung ein Versagen der Leitungsführung eintreten. Dies gilt auch für Leitungsführungen aus hochwertigen Kunststoffen, wenngleich diese durchaus eine höhere Lebensdauer als Leitungsführungen mit Kettengliedern aus Metall haben können.

Typischerweise sind Energieführungsketten und Leitungsführungseinheiten so ausgelegt, dass die gelenkige bzw. flexible Verbindung zwischen den einzelnen Gliedern oder Segmenten sehr dauerfest ist und eine über die erwartete Lebensdauer der sonstigen Elemente der Glieder bzw. Segmente hinausgehende Lebensdauer aufweisen. Mit anderen Worten, es kommt meist zu einem Bruch innerhalb der Kettenglieder, bevor die Verbindung bricht.

Bei einem Ausfall durch Kettenbruch besteht die Gefahr, dass die geführten Leitungen beschädigt werden, da diese nicht mehr hinreichend geschützt geführt sind. Daneben kann durch übermäßigen Verschleiß auch der bestimmungsgemäße Betrieb vereitelt werden, beispielsweise, wenn übermäßig verschlissene Kettenteile ineinander verhaken oder blockieren.

Es besteht daher bei Leitungsführungen seit längerem der Wunsch, die Leitungsführung anhand geeigneter Überwachungssysteme zu überwachen und einen Bruch der Leitungsführung frühzeitig erkennen zu können und rechtzeitig zu vermeiden.

Ein Überwachungssystem ist aus der Patentanmeldung WO 2004/090375 A1 bekannt. In einem Ausführungsbeispiel werden mittels Sensoren, insbesondere Dehnungsmessstreifen, an einzelnen Kettengliedern einwirkenden Kräfte gemessen und überwacht. So kann jedenfalls ein Bruch der Energieführungskette sofort erkannt werden. Eine alternative Sensorgestaltung für ein derartiges Überwachungssystem ist beispielsweise aus der Patentanmeldung WO 2013/156607 A1 vorbekannt.

Ein weiteres System zur Erkennung eines Bruchs einer Energieführungskette ist aus der Patentanmeldung WO 2015/118143 A1 vorbekannt. Hierbei löst bei Kettenbruch ein Zugseil aus, sodass erst der Bruch der Energieführungskette elektromechanisch erkannt wird. Es ist in vielen Anwendungen wünschenswert, bereits vor Eintreten eines bruchbedingten Ausfalls der Leitungsführung übermäßigen Verschleiß rechtzeitig und zuverlässig zu erkennen.

Die vorgenannten Systeme eignen sich sehr gut zum Auslösen eines Nothalts, wenn ein Ausfall der Energieführungskette bzw. Leitungsführungseinheit eingetreten ist. So kann u.a. Schaden an den geführten Leitungen vermieden werden. Zum Teil sind die erstgenannten Systeme in der Lage, bereits vor einem Bruch einen bevorstehenden Ausfall anzuzeigen. Hierzu sind die Systeme jedoch nur bedingt geeignet, recht aufwendig im Aufbau und erfordern z.T. erhebliche bzw. kostspielige Veränderungen an der Gestaltung der Leitungsführung selbst, sodass ein Nachrüsten bestehender Leitungsführungen schwierig erscheint.

Zur Verschleißerkennung ist beispielsweise aus der Offenlegungsschrift DE 196 47 322 A1 eine Energieführungskette bekannt, bei welcher die Kettenglieder einen Schichtaufbau mit zwei unterschiedlich gefärbten Kunststoffen aufweisen. Ist eine erste Kunststoffschicht abgetragen, wird eine andersfarbige zweite Schicht sichtbar, was das Überschreiten der zulässigen Verschleißgrenze für den Benutzer visuell erkennbar macht. Eine Erkennung ist jedoch so nur bei ständiger Überprüfung durch Bedienpersonal möglich und daher wenig zuverlässig.

Eine Weiterentwicklung in dieser Hinsicht wird in der Offenlegungsschrift DE 103 46 486 A1 vorgeschlagen. In einem als nächstliegenden Stand der Technik betrachteten Ausführungsbeispiel der DE 103 46 486 A1 ist die Energieführungskette mit einer elektrotechnischen Verschleißerkennung ausgerüstet. Hierzu weist die Vorrichtung zur Verschleißerkennung in einem Ausführungsbeispiel eine Detektorleitung auf, welche an mindestens einem Kettenglied nahe an einer Außenfläche geführt ist oder dort hervortritt, so dass ein Leitungsabschnitt im kritischen Bereich eine Leitungsunterbrechung verursacht. Grundsätzlich wäre diese Funktionsweise auch auf die Erkennung eines Ermüdungsbruchs übertragbar, wozu die DE 103 46 486 A1 bzw. EP 1 521 015 A2 in einem weiteren Beispiel (Fig.9-10) eine Brucherkennung vorschlägt.

### ERSTER ASPEKT

Eine erste Aufgabe der vorliegenden Erfindung ist es mithin, eine Lösung zur Verschleißerkennung vorzuschlagen, die sich kostengünstig auch in Groß-Serien bzw. Anwendungen mit einer Vielzahl aktiver Leitungsführungen realisieren lässt. Die Lösung soll mit möglichst wenig Änderung an der Gestaltung bestehender Leitungsführungen einhergehend und eine vollautomatische Früherkennung erlauben, beispielsweise in Hochverfügbarkeitsanwendungen oder sog. Zero-Downtime-Anwendungen.

Gattungsgemäße Energieführungsketten haben eine Anzahl Kettenglieder umfasst, welche einen Kanal bilden zur geschützten Führung von einer oder mehreren Leitungen, wie Kabeln, Schläuchen oder dergleichen, zwischen einem ersten Anschlussende und einem dazu relativbeweglichen zweiten Anschlussende, wobei benachbarte Kettenglieder in Längsrichtung jeweils gelenkig miteinander verbunden sind. Ebenfalls im Rahmen der Erfindung liegen Leitungsführungseinheiten, die über mindestens einen Längsabschnitt oder vollständig einstückig hergestellt sind, mit Segmenten, die funktional Kettengliedern entsprechen. Die Segmente bilden einen Kanal zur geschützten Führung einer oder mehrerer Leitungen. Benachbarte Segmente sind dabei in Längsrichtung jeweils flexibel miteinander verbunden, z.B. in der Art eines Filmscharniers. Als Leitungsführungseinheiten kommen insbesondere sog. Bandketten in Betracht.

Für beide Gattungen von aktiven bzw. dynamischen Leitungsführungen wird eine Vorrichtung zur Erkennung von Verschleiß in einem kritischen Bereich mindestens eines Kettenglieds bzw. Segments vorgeschlagen, die zwecks Automatisierung auf einem elektrotechnischen Wirkprinzip beruht. Unter Verschleiß wird hierbei allgemein jede, insbesondere gebrauchsbedingte, meist ungewollte Veränderung der Leitungsführung verstanden, insbesondere abriebbedingte Abnutzung, aber auch die Bildung feiner Risse und/oder ein Ermüdungsbruch, z.B. aufgrund von Materialermüdung oder -überbeanspruchung. Solche Risse pflanzen sich in der Regel fort und führen zum Ermüdungsbruch.

Gemäß einem Aspekt der Erfindung wird zur Lösung der erstgenannten Aufgabe vorschlagen, dass die Vorrichtung mindestens einen Transponder aufweist, welcher an dem mindestens einen Kettenglied bzw. Segment oder an einem benachbarten anderen Kettenglied bzw. Segment angeordnet ist, und jeweils für jeden Transponder mindestens ein mit dem Transponder zusammenwirkendes Detektorelement aufweist, das an dem erstgenannten, zu überwachenden Kettenglied bzw. Segment angeordnet ist.

Ferner sieht die Erfindung vor, dass das Detektorelement bei einem vorbestimmten Ausmaß von Verschleiß im kritischen Bereich das Verhalten des Transponders ändert, sodass diese verschleißbedingte Änderung drahtlos erkennbar ist.

Für diese Lösung geeignete Transponder sind zu sehr geringen Stückkosten erhältlich. Im einfachsten Fall reicht bei induktiver Kopplung als Transponder ein Resonanzschwingkreis oder eine kurzgeschlossene Spule, z.B. auf einen Schwingkreis abgestimmt.

Die erfindungsgemäße Lösung vermeidet anhand der drahtlosen Erkennbarkeit einerseits in Kombination mit der Anordnung des bzw. der Transponder unmittelbar am oder nahe dem überwachten Kettenglied die Notwendigkeit, eine Vielzahl einzelner Sensoren zu verdrahten, wie z.B. gemäß WO 2004/090375 A1. Dies reduziert die Materialkosten und den Arbeitsaufwand, die Leitungsführung jeweils anwendungsspezifisch mit der Erkennungsanordnung auszustatten.

Das vorbestimmte Ausmaß von Verschleiß kann, gegenüber dem Neuzustand, insbesondere eine abriebbezogene Verschleißgrenze oder eine Zustandsänderung sein, welche die bestimmungsgemäße Gebrauchstauglichkeit über ein akzeptables Maß hinaus beeinträchtigt. Der kritische Bereich kann ein äußerer Randbereich der Leitungsführung (im Neuzustand) sein, an diesen angrenzen oder unmittelbar benachbart in Richtung von fortschreitendem Verschleiß liegen. Grundsätzlich beinhaltet der kritische Bereich eine vorbestimmte Grenze des zulässigen Verschleißes, und Teilbereiche in welchen Verschleiß noch als unkritisch oder bereits als kritisch anzusehen ist. Der kritische Bereich ist an einer verschleißanfälligen Stelle vorzusehen.

Dadurch, dass ein Detektorelement bei einem vorbestimmten Ausmaß von Verschleiß im kritischen Bereich im Wesentlichen lediglich das Verhalten des Transponders ändert, sodass diese verschleißbedingte Änderung - z.B. gegenüber eines Nominalverhaltens - drahtlos erkennbar ist, kann eine elektrotechnisch sehr einfache und robuste Lösung ohne ausgeprägte Sensor-Komponente vorgesehen werden. Die Erfindung beruht u.a. auf der einfachen Erkenntnis, dass zur Feststellung eines kritischen Grads von Verschleiß, eine Messung im eigentlichen Sinne, d.h. eine quantitative Erfassung einer bestimmten Größe, nicht erforderlich ist.

Bevorzugt hat jeder Transponder genau ein Detektorelement, oder es sind für einen Transponder eine Anzahl n Detektorelemente an n benachbarten Kettengliedern bzw. Segmenten angeordnet, die ggf. jeweils über eine relativ kurze Detektorleitung auf den gemeinsamen Transponder einwirken. Die Anzahl n soll jedoch möglichst klein bleiben, da ansonsten wiederum Verdrahtungsaufwand entsteht. Detektorleitungen können ggf. abschnittsweise von der Leitungsführung selbst aufgenommen werden.

Die Änderung des durch ein Lesegerät bzw. einen Transceiver erfassbaren Transponderverhaltens kann auf viele verschiedene Arten realisiert werden, insbesondere als elektrotechnisch messbare Parameteränderung. Besonders einfach realisieren lässt sich z.B. eine Leitungsunterbrechung oder ein Leitungskurzschluss, welche die Betriebsbereitschaft des Transponders beeinflusst, insbesondere einstellt oder abstellt. Es kann z.B. die Schaltungstopologie durch den kritischen Verschleiß modifiziert werden, oder ein elektrotechnisch messbarer oder funktionsrelevanter Parameter, wie z.B. die Impedanzwerte (Wechselstromwiderstands-Werte) einer Resonanzschaltung im Transponder usw., verändert werden. Entscheidend für das Prinzip ist, dass der Transponder als Indikator zur Verschleißerkennung ein erkennbar anderes Verhalten zeigt bei Erreichen bzw. Überschreiten des zulässigen Ausmaßes an Verschleiß, und dies über Funk bzw. drahtlos erfassbar ist. So kann z.B. über eine Detektorleitung hin zu dem bzw. den kritischen Bereichen eine Leitungsunterbrechung die Verhaltensänderung herbeiführen. Es kann z.B. auch ein Teil der Transponder-Antenne selbst dem Verschleiß im kritischen Bereich ausgesetzt sein.

Eine n:1 Relation mit n Detektorelementen pro Transponder ist möglich entweder zur zuverlässigeren Erkennung an demselben Segment oder Kettenglied oder zur Überwachung von bis zu n Gliedern bzw. Segmenten. Als Lesegerät kommt insbesondere ein sende- und empfangsfähiger Transceiver in Betracht.

In einer leicht nachrüstbaren Ausführungsform sind der Transponder und das zusammenwirkende Detektorelement integriert in ein Erkennungsmodul, das insbesondere zum Anbringen an ein zu überwachendes Kettenglied bzw. Segment ausgeführt ist. Die Abmessungen des Moduls sind hierbei vorzugsweise deutlich kleiner als die Seitenfläche des Kettenglieds bzw. Segments. Das Erkennungsmodul wird so an dem mindestens einen zu überwachenden Kettenglied angeordnet, so dass das Detektorelement im kritischen Bereich liegt. Hierzu können die Kettenglieder bzw. Segmente z.B. vorgefertigte Aufnahmen oder Aussparungen aufweisen.

Die Erfindung betrifft gemäß einem weiteren, vom ersten Aspekt unabhängigen Aspekt auch ein Erkennungsmodul zum Aus- bzw. Nachrüsten einer Leitungsführung mit einer elektrotechnischen Verschleißerkennung, umfassend einen Transponder, dessen Verhalten, insbesondere Funkverhalten, verschleißbedingt veränderbar ist.

In einer zur Nachrüstung besonders geeigneten Ausführungsform umfasst das Erkennungsmodul einen Transponder, der eine Antenne und ein Detektorelement aufweist, und ein Gehäuse das mit einer bekannten Leitungsführung zusammenwirkende Befestigungsmittel aufweist, um das Erkennungsmodul an der Leitungsführung zu befestigen. Dabei ist das Gehäuse so gestaltet, dass ein Bereich des Gehäuses mit dem Detektorelement einem in Bezug auf Verschleiß kritischen Bereich ausgesetzt ist.

Bevorzugt sind die Befestigungsmittel kompatibel mit Querstegen oder den für diese an Seitenlaschen bestehenden Verbindern ausgeführt, um mit diesen) zusammenzuwirken. Das Gehäuse kann insbesondere aus Kunststoff, z.B. als Spritzgussteil hergestellt sein.

In einer bevorzugten Ausführungsform wird eine zweiteilige Funkschaltung vorgesehen, welche den Transponder umfasst, und einen starren ersten Schaltungsteil sowie einen flexiblen zweiten Schaltungsteil aufweist, wobei im flexiblen zweiten Schaltungsteil das Detektorelement vorgesehen ist, um dieses im Gehäuse und ggf. wahlweise positionieren zu können.

In einer Ausführungsform hat das Modul einen Träger bzw. ein Gehäuse mit einem abgesonderten Bereich , in dem das Detektorelement in Art einer Sollbruchstelle angeordnet ist, um bei verschleißbedingtem Bruch das Verhalten des Transponders zu ändern. Der Träger kann z.B. ein flexibles selbstklebendes Haftetikett darstellen. Als Gehäuse kommt z.B. ein Harzverguss eines herkömmlichen Transponders mit einem anwendungsangepassten zusätzlichen Detektorelement in Betracht. Das Modulgehäuse kann auch gemeinsam mit einer Funkschaltung im Spritzguss gegossen sein, beispielsweise im IMKS-Verfahren (Integriertes Metall Kunststoff Spritzgießen).

In einer Ausführungsform beider Aspekte sind Transponder und das zusammenwirkende Detektorelement in ein Erkennungsmodul integriert, wobei das Erkennungsmodul so an dem mindestens einen zu überwachenden Kettenglied bzw. Segment angeordnet werden kann bzw. ist, so dass das Detektorelement in dem vorbestimmten kritischen Bereich liegt der zu überwachen ist.

In einer Ausführungsform weisen eine Anzahl Kettenglieder bzw. Segmente in einem verschleißanfälligen Längsabschnitt der Leitungsführung jeweils mindestens ein Erkennungsmodul auf, vorzugsweise ein Erkennungsmodul an jeder Seitenlasche. Dies erlaubt auch bei schwerer Vorhersage des auf Verschleiß anfälligsten Kettenglieds bzw. Segments und/oder bei einer gewissen Fehlerrate des Transponders, z.B. einer gewissen falsepositive oder false-negative Rate bei sehr preisgünstigen Passivtranspondern, eine zuverlässige Erkennung.

Das Erkennungselement wirkt vorzugsweise schaltungstechnisch mit dem Transponder zusammen. Es kann als gesonderte Komponente mit dem Transponder verbunden sein, sodass das Auslöseverhalten nach Wunsch wählbar ist, oder als vorhandener Bestandteil des Transponders ausgeführt sein, was Herstellungskosten minimiert.

In einer einfachen Ausführungsform ist das Detektorelement als Leitungsabschnitt einer Detektorleitung ausgeführt, der im kritischen Bereich verläuft, z.B. ähnlich einer Sollbruchstelle dem vorbestimmten Ausmaß von Verschleiß ausgesetzt wird, und bei dem vorbestimmten Ausmaß von Verschleiß unterbrochen werden. Die Unterbrechung kann je nach Schaltungsanordnung die Betriebsbereitschaft des Transponders unterbinden und/oder diese erst oder wieder herstellen.

In einer Variante, welche die Betriebsbereitschaft verschleißabhängig einstellt bzw. freischaltet, d.h. sozusagen den Transponder einschaltet, hat der Transponder eine Antenne, welche im Neuzustand der Leitungsführung über das Detektorelement kurzgeschlossen ist. Dies erlaubt es, das Detektorelement so auszuführen, dass es bei dem vorbestimmten Ausmaß von Verschleiß den Kurzschluss öffnet und damit die Antennenfunktion freigibt.

Alternativ hierzu kann der Transponder außer Betrieb genommen werden, wenn das Detektorelement als ein Bestandteil der Antenne selbst ausgeführt ist, der so im kritischen Bereich verläuft, dass die Antenne bei dem vorbestimmten Ausmaß von Verschleiß unterbrochen bzw. funktionsuntauglich wird.

Insbesondere, aber nicht ausschließlich für autark aus der Funkleistung versorgte bzw. passive Transponderkonfigurationen, ist es vorteilhaft, wenn die Antenne als Induktionsspule ausgeführt ist bzw. eine Induktionsspule umfasst. Auch Dipolantennen sind jedoch möglich, insbesondere für höhere Frequenzbereiche, wobei derartige Systeme in der Regel aktive Transponder mit eigener Stromversorgung aufweisen.

Eine Induktionsspule als Antenne kann insbesondere bei Passivtranspondern Bestandteil eines Resonanzschwingkreises im Transponder sein, welcher als Saugkreis bzw. Schwingungstilger durch Resonanzabsorption eine vom Lesegerät bzw. Transceiver gemessene Veränderung im elektromagnetischen Feld auf der Resonanzfrequenz verursacht. Hierzu ist das Frequenzhub-Verfahren bekannt, bei dem das Lesegerät die Frequenz über einen Bereich um die Resonanzfrequenz variiert, d.h. "gewobbelt", um den Feldeinbruch bei Resonanz durch den Transponder zu erfassen. Entsprechende Transponderschaltungen, sog. EAS-Tags, die ursprünglich zur Warendiebstahlsicherung entwickelt wurden, sind z.B. in den frühen Patenten US 3,810,147 oder US 3,500,373 beschrieben. Bei derartigen Systemen sind die Transponder äußerst preiswert herstellbar, z.B. als Haftetiketten, dass diese im Wesentlichen nur aus dem Resonanzschwingkreises mit der Induktionsspule und einem Kondensator bestehen. Zudem verbrauchen bei diesen Systemen die Lesegeräte wenig elektrische Leistung.

Für große Stückzahlen sind passive Transponder, insbesondere sog. 1-Bit-Transponder bzw. Single-Bit-Transponder geeignet, d.h. Transponder, die lediglich die Information vermitteln: "Transponder im Arbeitsbereich: ja" bzw. ""Transponder im Arbeitsbereich: nein" (daher 1-Bit). Hierzu kommen als Transponderkonfigurationen insbesondere in Betracht:
- Transponder in Form der o.g. RF(Radiofrequenz)-LC-Resonanzschwingkreise (sog. RF-Systeme, z.B. von der Fa. Checkpoint Systems http://us.checkpointsystems.com/ oder Agon Systems: http://www.agon-systems.com), z.B. bei 8,2 MHz Grundfrequenz des Generators: diese sind sehr preiswert und energieeffizient bei kurzer bis mittlerer Reichweite (remote coupling Systeme: bis einige Meter);
- Transponder zur Frequenz-Vervielfachung im Mikrowellenbereich, welche Harmonische der Generatorfrequenz erzeugen, typischerweise im Mikrowellenbereich, z.B. anhand einer Dipolantenne mit Kapazitätsdiode: diese erzeugen im Wesentlichen keine Fehlerkennung bzw. Fehlalarme bei hoher Reichweite (long range Systeme, bis über 10m);
- Transponder als Frequenzteiler im Langwellenbereich, z.B. zwischen ca. 90-140kHz, mit einem Mikrochip und einer Schwingkreisspule: mit ebenfalls geringer Fehlerquote;
- Transponder für das elektro-magnetische Verfahren (EM-Verfahren) im NF-Bereich bis ca. 22kHz, welche eine periodische Ummagnetisierung eines weichmagnetischen Metalls erfassen: diese eignen sich für Leitungsführungen mit im Wesentlichen aus Metall hergestellten Kettengliedern, haben jedoch eine gewisse Fehlerquote (typ. ca. 25-30%) und eine kurze Reichweite (bis ca. 2m);
- Transponder für das akusto-magnetische Verfahren (AM-Verfahren) basierend auf dem Prinzip der Magnetostriktion, z.B. bei 58kHz von der Fa. Sensormatic (http://www.sensormatic.com): welche eine mittlere bis große Reichweite bis ca. 20m bei geringer Fehlerquote aber sehr hohem Energieverbrauch haben.

Passivtransponder der o.g. Bauarten können insbesondere durch Verschleiß ausgeschaltet bzw. unwirksam (z.B. unbrauchbar oder vollständig zerstört) werden, z.B. indem als Detektorelement ein funktionsrelevanter Bestandteil als Sollbruchstelle im kritischen Bereich angeordnet wird.

Bei Passivtranspondern mit nennenswerter Fehlerquote ist es vorteilhaft, ein System mit einer Anzahl redundanter Transponder aufzubauen. Durch Redundanz wird ermöglicht, dass erst dann übermäßiger Verschleiß signalisiert wird, wenn mehrere oder alle unabhängigen Transponder kein Rücksignal geben. So kann bei hinreichend unabhängiger Anordnung, z.B. durch räumliche Variation, das Fehlalarmrisiko (false positive) auf eine vernachlässigbare Wahrscheinlichkeit reduziert werden.

Alternativ zu passiven Single-Bit-Transpondern, kann gemäß einem weiteren Aspekt der Transponder als passiver oder aktiver RFID-Transponder ausgeführt sein mit einem Mikrochip der eine Identifikationsinformation bzw. Kennung speichert. Hierbei hat der Transponder vorzugsweise eine Antenne zur Drahtloskommunikation im IFM-Band umfasst, was ggf. eine behördliche Zulassung auch bei größeren Sendeleistungen für höhere Reichweiten erübrigt.

Aktive RFID-Transponder ermöglichen größere Reichweiten der drahtlosen Überwachung z.B. für Leitungsführungen mit langem Verfahrweg (>>2m). Die Stromversorgung des bzw. der aktiven RFID-Transponder kann dabei über eine in der Leitungsführung geführte Versorgungsleitung erfolgen. Vorzugsweise speist eine einzige zweiadrige Leitung ggf. alle aktiven RFID-Transponder, sodass der Verdrahtungs- und Herstellungsaufwand überschaubar bleibt.

Die Identifikationsinformation eines passiven oder aktiven "echten" RFID-Transponders kann über das Lesegerät abgefragt werden. So kann beispielsweise eine Plausibilitätsprüfung, eine Lokalisierung des betroffenen Kettenglieds und/oder Identifikation der zu wartenden Leitungsführung ermöglicht werden. Bei RFID-Systemen kommt insbesondere in Betracht, den Transponder erst bei Erreichen des kritischen Grads von Verschleiß einzuschalten, um Fehlerkennungen zu minimieren.

Unabhängig von der gewählten Transpondertechnologie kann es zur Funktionskontrolle, insbesondere bei verschleißbedingt einschaltenden Transpondern, wünschenswert sein, einen weiteren unabhängigen Prüf-Transponder, vorzugsweise für denselben Frequenzbereich, in einem zu überwachenden Bereich der Leitungsführung vorzusehen, dessen Verhalten vorzugsweise nicht verschleißbedingt ändert und der bei Neuzustand betriebsbereit ist. Der Kontroll- bzw. Prüftransponder sollte dabei nicht dem Verschleiß ausgesetzt sein, z.B. ohne Detektorelement ausgeführt sein, aber ansonsten möglichst analog zu den Transpondern zur Verschleißerkennung an der Leitungsführung im Funkbereich der Vorrichtung angeordnet sein.

Bei Anwendung in konventionell aufgebauten Energieführungsketten können Transponder und Detektorelement, insbesondere in ein Erkennungsmodul integriert, an einer Seitenlasche und/oder an einem Quersteg befestigt sein. Hierbei haben Kettenglieder jeweils gegenüberliegende Seitenlaschen, und zumindest einige der Kettenglieder haben mindestens einen die Seitenlaschen verbindenden Quersteg. Das Detektorelement kann bei gleitendem Obertrum insbesondere an einer verschleißanfälligen Schmalseite angebracht werden, d.h. an einer zur inneren und äußeren Seitenfläche der Seitenlaschen und senkrechten und zur Längsrichtung der Kette im Wesentlichen parallelen kleinen Seite der Seitenlasche.

Bei modulartiger Bauweise kann das Erkennungsmodul mit einem Verbinder am Kettenglied bzw. Segment zur mechanischen Befestigung zusammenwirken, z.B. formschlüssig in einer Aufnahme untergebracht werden, und ggf. mit einem Verschluss gesichert werden.

In einer besonders einfachen und kostengünstigen vorbildhaften Konfiguration kann der Transponder auf einem selbstklebenden Haftetikett realisiert, vorzugsweise gemeinsam mit dem Detektorelement. Ebenfalls im Rahmen der Erfindung liegt eine aufwendigere Realisierung, bei welcher mehrere Detektorelemente jeweils einzeln in kritischen Bereichen an ein und demselben Kettenglied bzw. Segment oder an verschiedenen benachbarten Kettengliedern bzw. Segmenten angeordnet sind und mit einem gemeinsamen Transponder, vorzugsweise einem RFID-Transponder mit Mikrochip, zusammenwirken. Der Mikrochip kann mehrere Eingänge zum Anschließen der einzelnen Detektorelemente umfassen, und eine von deren Zustand abhängige Information als Veränderung an das Lesegerät senden. So lassen sich beispielsweise verschiedene Stufen von Verschleiß ermitteln. Als Mikrochip wird vorliegend jede geeignete integrierete Schaltung verstanden, die in einem gängigen SMD- oder THT-Package erhältlich oder herstellbar ist.

Es liegt ebenfalls im Rahmen der Erfindung, dass das Detektorelement nicht selbst durch den Verschleiß beeinträchtigt wird, sondern als Geber eine Sollbruchstelle am Kettenglied bzw. Segment überwacht. Hierzu können die Kettenglieder bzw. Segmente jeweils im kritischen Bereich eine Sollbruchstelle aufweisen, die bei dem vorbestimmten Ausmaß von Verschleiß das Detektorelement auslöst. Das Detektorelement kann dabei als elektromechanisches Schaltmittel ausgeführt sein, was ggf. eine gezieltere und von den elektrotechnischen Bauteilen unabhängige Einstellung der Verschleißgrenze erlaubt. So kann z.B. ein identisches Erkennungsmodul unabhängig von der Bauweise der Kettenglieder bzw. Segmente jeweils für eine Vielzahl Typen von Leitungsführungen verwendet werden.

Besonders kostengünstig ist eine Realisierung bei welcher das Detektorelement als passive Schaltungskomponente bzw. als Leiterabschnitt ausgeführt ist, z.B. als Leiterschleife durch den kritischen Bereich mit einem Wendepunkt bzw. Wendeabschnitt an der Verschleißgrenze. So kann das Detektorelement selbst im kritischen Bereich eine Art Sollbruchstelle bilden, und als Teil einer Detektorleitung mit dem Transponder verbunden sein.

Sowohl bei Leitungsführungen mit einem Untertrum und einem demgegenüber gleitenden Obertrum, als auch bei Leitungsführungen mit freitragendem Obertrum, ist in der Regel nur ein begrenzter Längsabschnitt der stärksten mechanischen Beanspruchung ausgesetzt. Der kritische Längsabschnitt ist anwendungsabhängig und liegt meist in einem Intervall des Obertrums zwischen einem ersten Punkt im Abstand vom Mitnehmer, z.B. näherungsweise bei ca. 1-30%, insbesondere 5-20%, der Gesamtlänge, und einem zweiten Punkt im Abstand vom Mitnehmer der vor dem Umlenkbogen bei kürzestem Obertrum liegt, z.B. näherungsweise bei ca. 35-49%, insbesondere 40-45%, der Gesamtlänge. In der Praxis ist z.B. erfahrungsgemäß bei gleitenden Leitungsführungen oft derjenige Längsabschnitt am stärksten beansprucht, der bei Druckbelastung bzw. beim Rückhub des Mitnehmers als letztes aus dem Gleitkontakt mit dem Untertrum geht bzw. "abhebt". Daher können ein oder mehrere Transponder und/oder zusammenwirkende Detektorelemente zweckmäßig in diesem Längsabschnitt des Obertrums angeordnet sein. Versuche zeigten, dass eine Überwachung eines Längsabschnitts des Obertrums der bei Minimallänge des Obertrums zwischen einem ersten Abstand vom Mitnehmer und einem zweiten Abstand, der entfernt vom Mitnehmer und vor dem eigentlichen Umlenkbogen liegt, für viele Fälle geeignet ist. Dieser Bereich kann z.B. von ca. 1m Abstand hin zu etwa 3-4m Abstand vom Mitnehmer liegen. Es kommen auch andere Längsabschnitte mit Transponder(n) in Betracht, z.B. bei besonders abriebbehafteten Anwendungen, ein verschleißanfälliger Abschnitt der bei maximal ausgefahrenem Mitnehmer etwa mittig zwischen Mitnehmer und Umlenkbogen angeordnet ist.

Das vorliegende technische Konzept kann auch ein System zur elektrotechnischen Verschleißerkennung umfassend eine Leitungsführung mit mindestens einem Transponder dessen Verhalten sich bei einem vorbestimmten Ausmaß von Verschleiß ändert, sowie ein drahtlos mit dem Transponder zusammenwirkendes Lesegerät, insbesondere mit einer Transceiver-Schaltung, zur drahtlosen Überwachung des Transponderverhaltens. betreffen. Durch die drahtlose Überwachung wird, insbesondere bei einer Mehrzahl von Transpondern, ein erheblicher Verkabelungsaufwand für die Erkennungsvorrichtung vermieden, welche u.a. das Nutzvolumen im Kanal der Leitungsführung reduziert und die anwendungsspezifische Konfiguration beinträchtigen könnte. Das System kann neben der eigentlichen automatischen Signalisierung von übermäßigem Verschleiß weitere hilfreiche Funktionen aufweisen, z.B.
- eine Notausschaltung zum Anhalten der durch die Leitungsführung versorgten Maschine, Anlage oder dgl.;
- eine Datenschnittstelle zu einem Wartungsmeldungssystem; und/oder
- eine Datenschnittstelle zu einem Warenwirtschaftssystem, bspw. für eine teil- oder vollautomatische Bestellung einer Austausch-Leitungsführung.

### ZWEITER ASPEKT

Bei bekannten Systemen zur Verschleiß-Erkennung ist nachteilig, dass u.U. keine zuverlässige Erkennung des unkritischen Zustands (ohne kritischen Verschleiß) und des verschleißkritischen Zustands möglich ist. Ein Ausbleiben des Transponder-Signals kann neben Verschleiß andere Ursachen haben, z.B. ein Verlassen der Reichweite des Lesegeräts, ein Ausfall aus anderen Gründen usw.

Es ist mithin eine unabhängige zweite Aufgabe der Erfindung eine Funkschaltung zur Zustandserkennung, insbesondere zur Verschleißerkennung, vorzuschlagen, welche eine zuverlässigere Erkennung des aktuellen Zustands erlaubt oder zumindest eine Funktionsüberprüfung der Verschleiß Erkennung ermöglicht. Dies soll vorzugsweise bei geringer Baugröße, d.h. platzsparend, und geringen Kosten ermöglicht werden. Insbesondere soll dabei zugleich eine zur Wahrung der Reichweite hinreichende Antennengrösse ermöglicht werden. Die Funkschaltung ist insbesondere zur Verschleißerkennung an Energieführungsketten geeignet auszuführen. Sie sollte dementsprechend kompakt und kostengünstig herstellbar sein.

Gemäß einem Beispiel sind eine erste Transponder-Einheit die Funktionsprüfung erlaubt und eine zweite Transponder-Einheit die eigentliche Erkennung einer Zustandsänderung erlaubt, wobei beide mit derselben Antenne verbunden. Somit wird platz- und kostensparend für beide Transponder-Einheiten nur eine gemeinsame Antenne vorgesehen. Hierzu kann insbesondere eine Detektorleitung, insbesondere eine Kurzschluss-Stichleitung oder eine Leerlauf-Stichleitung, an die zweite Transponder-Einheit angeschlossen sein, wobei die Detektorleitung in einem räumlich getrennten kritischen Bereich einen Detektorbereich aufweist, welcher bei einer vorbestimmten Zustandsänderung, insbesondere bei einem vorbestimmten Ausmaß von Verschleiß, im kritischen Bereich das Verhalten der zweiten Transponder-Einheit ändert, sodass diese Änderung drahtlos erkennbar ist.

Die Transponder-Einheiten können als integrierte RFID-Schaltungen, insbesondere UHF-RFID-Schaltungen ausgeführt sein. Dabei kann die zweite RFID-Schaltung über eine Übertragungsleitung leitend mit der gemeinsamen Antenne verbunden sein, und die Detektorleitung kann als Stichleitung ausgeführt sein. In dieser Ausführungsform kann der Detektorbereich in Bezug auf die Impedanz bzw. in Bezug auf die Leistungsübertragung eine Fehlanpassung zwischen der zweiten RFID-Schaltung und der Antenne bewirken.

Die Fehlanpassung kann im wesentlichen aufhebbar sein indem der Detektorbereich bei der Zustandsänderung, insbesondere bei einem vorbestimmten Ausmaß von Verschleiß, im kritischen bzw. anfälligen Bereich von der restlichen Stichleitung getrennt wird. Dies kann insbesondere eine hinreichende Sendeleistung der zweiten RFID-Schaltung über die Antenne erst herbeiführen. Somit kann ein ohne abgetrennten Detektorbereich verbleibender Teil der Stichleitung im Wesentlichen eine Anpassung in Bezug auf die Leistungsübertragung, insbesondere Impedanz-Anpassung, zwischen der zweiten RFID-Schaltung und der Antenne bewirken.

Die Transponder-Einheiten können baugleiche integrierte RFID-Schaltungen, insbesondere UHF-RFID-Schaltungen, mit unterschiedlichen d.h. identifizierbaren Kennungen sein.

Die Detektorleitung kann als Kurzschluss-Stichleitung wirken und in Abhängigkeit des Verschleißzustands, entweder Fehlanpassung oder Anpassung in Bezug auf die Impedanz bzw. Leistungsübertragung ausgeführt sein.

Die vorgeschlagene Funkschaltung kann insbesondere in dynamischen bzw. aktiven Leitungsführungen, jedoch auch in anderen industriellen Anwendungsgebieten eingesetzt werden.

### WEITERE ASPEKTE

Die Erfindung betrifft gemäß einem weiteren unabhängigen Aspekt auch eine Verwendung eines Erkennungsmoduls zur elektrotechnischen Erkennung von Verschleiß in einem kritischen Bereich einer Leitungsführung, wobei der Verschleiß insbesondere durch Abnutzung, Rissbildung, Ermüdungsbruch, und/oder dergleichen verursacht ist. Das Verfahren zeichnet sich im Sinne der Erfindung dadurch aus, dass bei einem vorbestimmten Ausmaß von Verschleiß das Verhalten eines an der Leitungsführung angeordneten Transponders ändert. Diese Änderung wird über ein Lesegerät bzw. einen Transceiver drahtlos erfasst, z.B. zwecks Auslösens einer Wartungsmeldung und/oder eines Notstopps oder dgl.

Weitere zweckmäßige und bevorzugte Merkmale der Erfindung ergeben sich aus den beigefügten Figuren, anhand derer bevorzugte Ausführungsbeispiele der Erfindung nachfolgend ohne Beschränkung der Allgemeinheit der vorstehenden Beschreibung erläutert werden. In den Figuren bezeichnen gleiche Bezugszeichen baugleiche oder funktionsgleiche Elemente. Hierin zeigen:
FIG.1 als Prinzipschema in Seitenansicht eine Energieführungskette mit einem auf dem Untertrum gleitenden Obertrum und mit einer erfindungsgemäßen Verschleißerkennung;
FIG.2A-2B in schematischer Seitenansicht ein Kettenglied der Energieführungskette gemäß FIG.1 im Neuzustand (FIG.2A) und in einem kritischen Verschleißzustand (FIG.2B);
FIG.3 in schematischer Seitenansicht ein Kettenglieds mit einem zweiten Beispiel einer erfindungsgemäßen Verschleißerkennung;
FIG.4 als Prinzipschema in Seitenansicht eine Energieführungskette mit freitragendem Obertrum und einem weiteren Beispiel einer erfindungsgemäßen Verschleißerkennung;
FIG.5 in schematischer Seitenansicht ein Kettenglied für eine Energieführungskette gemäß FIG.4;
FIG.6-8 schematische Prinzip-Schaltbilder beispielhafter RFID-Funkschaltungen zur drahtlosen Erfassung einer vorbestimmten Abnutzung in einem verschleißanfälligen Bereich;
FIG.9A-9B im Längsschnitt eine Seitenlasche für ein mehrteiliges Kettenglied, mit einer Aussparung in einem kritischen Bereich zur Aufnahme einer Funkschaltung;
FIG.10 im Querschnitt ein Kettenglied mit Gleitschuhen zur Aufnahme einer Funkschaltung, z.B. gemäß FIG.6, 7 oder 8;
FIG.11 ein Prinzip-Schaltbild einer besonders einfachen passiven RF-Funkschaltung in Form eines LC-Schwingkreises zur drahtlosen Erfassung einer vorbestimmten Abnutzung;
FIG.12 ein Prinzip-Schaltbild einer weiteren Funkschaltung, welche im Neuzustand betriebsbereit ist, bei Überschreiten einer ersten Verschleißgrenze nicht betriebsbereit ist und bei Überschreiten einer zweiten Verschleißgrenze wieder betriebsbereit ist;
FIG.13 ein Prinzip-Schaltbild einer RFID-Funkschaltung mit UHF-Dipolantenne und einer Trennvorrichtung hierfür;
FIG.14 ein Prinzip-Schaltbild einer RFID-Funkschaltung mit UHF-Dipolantenne mit einem Detektorelement, das die Antennenparameter verändert;
FIG.15 ein Prinzip-Schaltbild einer RFID-Funkschaltung mit UHF-Dipolantenne und einer Detektorschaltung;
FIG.16 ein Prinzip-Schaltbild eines Ausführungsbeispiels mit RFID-Funkschaltungen, welches eine Funktionsprüfung erlaubt;
FIG.17 ein Prinzip-Schaltbild eines zweiten Ausführungsbeispiels von RFID-Funkschaltungen zur Funktionsprüfung;
FIG.18 ein Prinzip-Schaltbild eines dritten Ausführungsbeispiels RFID-Funkschaltungen zur Funktionsprüfung; und
FIG.19A-19B ein erstes Ausführungsbeispiel eines Erkennungsmoduls mit erfindungsgemäßer Funkschaltung zum Nachrüsten eines Kettenglieds einer Energieführungskette;
FIG.20A-20D ein zweites Ausführungsbeispiel eines Erkennungsmoduls mit erfindungsgemäßer Funkschaltung zum Nachrüsten eines Kettenglieds einer Energieführungskette; und
FIG.21A-21B eine aktiven Leitungsführung aus mehreren einstückig hergestellten Segmenten mit einer erfindungsgemäßen Verschleißerkennung.

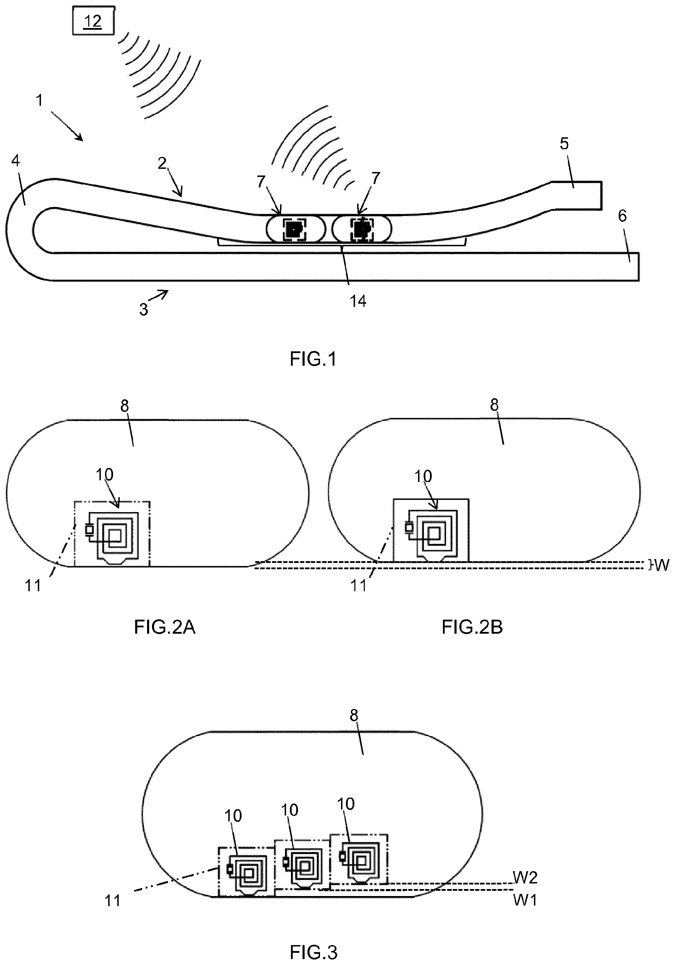

FIG.1 zeigt beispielhaft eine Energieführungskette 1, dessen Obertrum 2 auf dem Untertrum 3 abgleitet. Bezogen auf einen Festpunkt 6 der Energieführungskette 1, von welchem aus eine am hin- und her fahrbaren Mitnehmer 5 angeordnete bewegliche Einheit, Baugruppe, oder dgl. (nicht gezeigt) zu versorgen ist, ergibt sich je nach Anwendung und Dimensionierung ein kritischer Kettenabschnitt 14 oder ggf. mehrere solcher Abschnitte. Kritische Kettenabschnitte 14 sind empirisch bestimmbar bzw. für den Fachmann bei der Planung ersichtlich, z.B. aus dem Beladungsgewicht, dem minimalen Biegeradius im Umlenkbogen 4, der Gesamtlänge der Energieführungskette 1, der Geschwindigkeit des Mitnehmers 5 und weiteren anwendungsabhängigen Daten. Kritisch kann insbesondere der Kettenabschnitt 14 des Obertrums 2 sein der, je nach Stellung des hin- und herfahrenden Mitnehmers 5 bzw. Umlenkbogens 4, überwiegend auf dem Untertrum gleitet und damit dem meisten reibungsbedingten Abrieb unterliegt. In dem bzw. den kritischen Abschnitten 14 sind die Kettenglieder 7 jedenfalls besonders verschleißanfällig.

Zur Vermeidung unerwünschter Auszeit der zu versorgenden Maschine, Anlage oder dgl. (nicht gezeigt) ist ein Bruch der Energieführungskette 1 bzw. einer darin geführten Leitung zu vermeiden. Dies kann durch rechtzeitigen Austausch übermäßig verschlissener Kettenglieder 7 (FIG.2B) oder vollständigen Austauschs der abgenutzten Energieführungskette 1, z.B. bei planmäßigem Halt gewährleistet werden, im Rahmen der vorbeugenden Instandhaltung (Engl. predictive maintenance).

Besonders wünschenswert ist es, die Energieführungskette 1, oder deren Kettenglieder 7 genau dann zu tauschen, wenn ihre Lebensdauer vollständig ausgeschöpft ist. Hierzu sind ausgewählte oder alle Kettenglieder 7 eines kritischen Kettenabschnitts 14 jeweils mit einer Funkschaltung 10 ausgerüstet. Beispiele von Funkschaltungen 10 sind näher aus FIG.2A-2B, auch FIG.3, FIG.6-8 und FIG.11-12 ersichtlich. Die Funkschaltungen 10 können insbesondere RFID-Transponder aufweisen und kommunizieren drahtlos mit einem geeigneten Funk-Transceiver, insbesondere einem RFID-Lesegerät 12. Dabei sind die Funkschaltungen 10 in kritischen Bereichen 11 der Seitenlaschen 8 der einzelnen Kettenglieder 7 derart angeordnet, dass sich bei Erreichen einer vorbestimmten, kritischen Verschleißgrenze W (FIG.2B) das Funkverhalten der Funkschaltung 10 ändert. Beispielsweise kann die Funkschaltung 10 bei Erreichen bzw. Überschreiten der Verschleißgrenze W ein anderes Antwort-Signal an das RFID-Lesegerät 12 senden, als in unkritischem Betriebszustand bzw. im Neuzustand (FIG.2A). Die vorbestimmte Verschleißgrenze W wird so festgelegt, dass bei deren Erreichen bzw. Überschreiten die Energieführungskette 1 noch einer relativ geringen Anzahl Bewegungszyklen, z.B. ca. 1% der Gesamtlebenserwartung, zuverlässig standhält. Erst anschließend kann ein hohes Ausfallrisiko bestehen. Auch die Verschleißgrenze W ist anwendungsabhängig und lässt sich durch Dauerversuche an Probeaufbauten, Modell-Berechnung, und/oder Erfahrungswerte bestimmen.

Gemäß einer Weiterbildung nach FIG.3 können an einer einzelnen Kettenlasche 8 eines Kettenglieds 7 mehrere unabhängige Funkschaltungen 10 vorgesehen sein. Durch ein geeignetes Abstufen bzw. Staffeln der Funkschaltungen 10 in Bezug auf fortschreitende Abnutzung hin zur Verschleißgrenze W, verändern die einzelnen Funkschaltungen 10 zeitversetzt nacheinander entsprechend dem fortschreitenden Verschleiß ihr Funkverhalten. Auf diese Weise kann nicht nur das Überschreiten einer diskreten, kritischen Verschleißgrenze W (vgl. FIG.2B) erfasst werden, sondern auch anhand des RFID-Lesegerätes 12 funkbasiert bzw. drahtlos eine annähernde Erkenntnis zum Verschleißzustand eines bestimmten Kettenglieds 7 getroffen werden. Zudem wird eine Plausibilitätsprüfung ermöglicht: verändert z.B. nur eine nachrangige Funkschaltung 10 ihr Verhalten, ohne dass die der Abstufung nach vorhergehende dies bereits signalisiert hat, liegt voraussichtlich ein nicht verschleißbedingter Fehler vor, der bei regulärer Wartung zu prüfen ist.

Wird bei der in Abnutzungsrichtung letzten Funkschaltung 10 gemäß FIG.3 die Verschleißgrenze W im kritischen Bereich 11 überschritten, wird auch hier eine rechtzeitige Wartung veranlasst werden, um einen Schaden an den geführten Leitungen bzw. einen Ausfall der durch die Energieführungskette 1 versorgten Maschine, Anlage oder dgl. zu vermeiden.

Anders als im Beispiel nach FIG.2A-2B ist für die Anordnung nach FIG.3 eine Identifikation der einzelnen Funkschaltung zwecks Zuordnung zur überschrittenen Verschleißstufe nötig. Ermöglicht werden die Funktionen nach FIG.3 besonders einfach mit RFID-Transpondern, welche eine eineindeutige Kennung bzw. unverwechselbare Identifikationsnummer aufweisen und auf Funkabfrage durch das RFID-Lesegerät 12 rücksenden. Hierzu sind z.B. sog. RFID-Tags mit Mikrochip geeignet, welche z.B. nach ISO 18000-1 bzw. IEC 18000-6C ausgeführt sind und eine eindeutige Identinformation an das RFID-Lesegerät 12 rücksenden. Die vorbestimmte Zuordnung ist im RFID-Lesegerät 12 oder einem damit verbundenen Rechner hinterlegt.

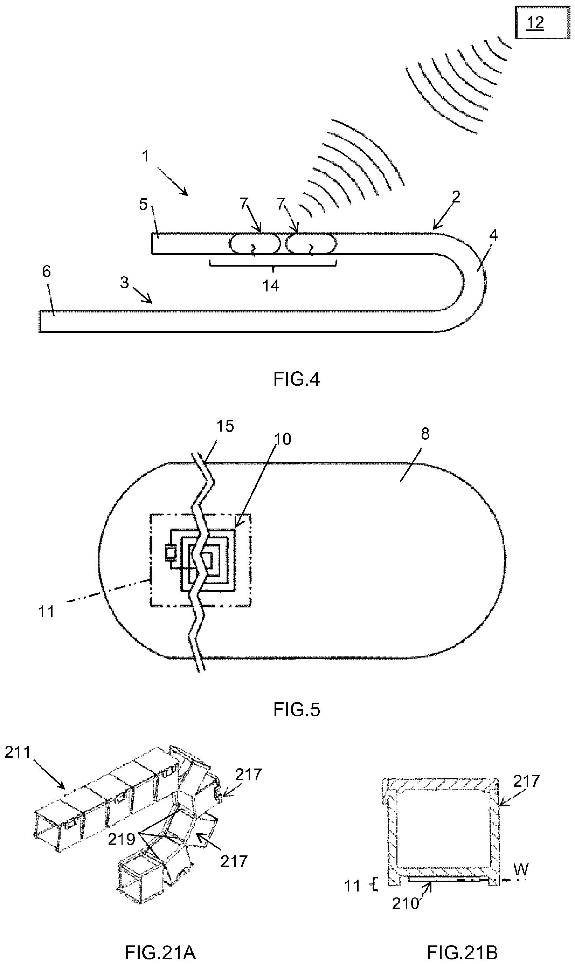

FIG.4-5 zeigen eine alternative Anordnung einer Energieführungskette 1 mit elektrotechnischer Verschleißerkennung gemäß einem weiteren Ausführungsbeispiel. Die Energieführungskette 1 gemäß FIG.4 ist als freitragende Kette (das Obertrum 2 gleitet nicht auf dem Untertrum 3) ausgeführt. Je nach dem beladenen Gewicht und der Beanspruchung der Energieführungskette 1 kann es auch bei derartigen Ketten zum Versagen kommen, z.B. wenn die Lebenserwartung der Energieführungskette 1 überschritten ist. Typische Abnutzungserscheinungen sind dabei feine, fortschreitende Risse 15 in den Seitenlaschen 8 der Kettenglieder 7, die schließlich zu einem vollständigen Bruch eines Kettenglieds 7 führen könnten. Auch hier lässt sich empirisch ein kritischer Kettenabschnitt 14 bestimmen, in dem die einzelnen Kettenglieder 7 am anfälligsten hinsichtlich Abnutzungserscheinungen sind bzw. das Risiko eines Kettenbruchs am größten ist.

Dementsprechend liegt für den Anwendungsfall gemäß FIG.4 der kritische Bereich 11 dort, wo erfahrungsgemäß Risse durch Materialermüdung in der Seitenlasche 8 am wahrscheinlichsten auftreten können. Auch hier wird im kritischen Bereich 11 eine Funkschaltung 10 vorgesehen, deren Sendeverhalten in Zusammenwirkung mit beispielsweise einem RFID-Lesegerät 12 sich bei Auftreten von Rissen in der Seitenlasche 8 verändert. Im Beispiel nach FIG.4-5 ist eine möglichst großflächige und dauerfeste Verbindung der Funkschaltung 10 mit dem Material der Seitenlasche 8 vorteilhaft, was besonders einfach durch selbstklebende RFID-Haftetiketten erreicht werden kann. Im Gegensatz zu handelsüblichen RFID-Tags ist bei dieser Anwendung aber kein möglichst bruchfestes bzw. dauerbeständiges Trägermaterial für das Haftetikett erforderlich. Vielmehr ist zumindest im kritischen Bereich 11 ein bruchanfälliges Trägermaterial für die Funkschaltung 10 wünschenswert, wobei der kritische Bereich 11 ggf. gesondert vom eigentlichen Transponder vorgesehen werden kann oder das Trägermaterial insgesamt bruchanfällig ist.

In den Ausführungsbeispielen nach FIG.1 und FIG.2A-2B bzw. FIG.1 und FIG.3 sowie FIG.4-5 sind die Funkschaltungen 10 selbst unmittelbar jeweils in einem kritischen Bereich 11 mindestens eines Kettenglieds 7, vorzugsweise mehrerer Kettenglieder 7 in einem kritischen Kettenabschnitte 14 der Energieführungskette 1 angeordnet. Der bzw. die kritischen Kettenabschnitt 14 werden hierbei empirisch ermittelt, beispielsweise durch Dauerversuche in einem Prüflabor und stellen besonders verschleißanfällige und/oder ermüdungsanfällige Stellen der Energieführungskette 1 insgesamt dar.

Das Prinzip zur drahtlosen Verschleißerkennung anhand von Funkschaltungen 10 ist anwendbar auf die Erkennung von Verschleiß bzw. Abnutzung durch reibungsbedingten Abrieb, durch den Betrieb der Energieführungskette 1, wie beispielsweise bei gleitenden Energieführungsketten 1 (FIG.1). Das Prinzip ist gleichermaßen anwendbar auf die Erkennung von Rissbildung in den Seitenlaschen 8 ausgewählter Kettenglieder 7, welche bei Überschreiten der nominalen Lebensdauer der Energieführungskette 1 alterungsbedingt durch Materialermüdung oder ggf. auch vor Erreichen der Lebenserwartung durch unsachgemäße Beanspruchung auftreten können.

Zur Verschleißerkennung ist vorgesehen, dass die Funkschaltung 10 ihr Sendeverhalten in Zusammenwirkung mit einem Transceiver, beispielsweise mit dem RFID-Lesegerät 12, aufgrund mechanischer Beanspruchung verändert, jedoch erst, wenn ein Zustand kritischer Abnutzung am zugeordneten Kettenglied 7 erreicht ist. Der Abnutzungsgrad, bei welchem die anhand der Funkschaltung 10 erfassbare Änderung eintritt, ist z.B. durch Positionieren so gewählt, dass kritischer Verschleiß signalisiert wird, bevor es zum vollständigen Bruch bzw. Ausfall der Energieführungskette 1 kommt.

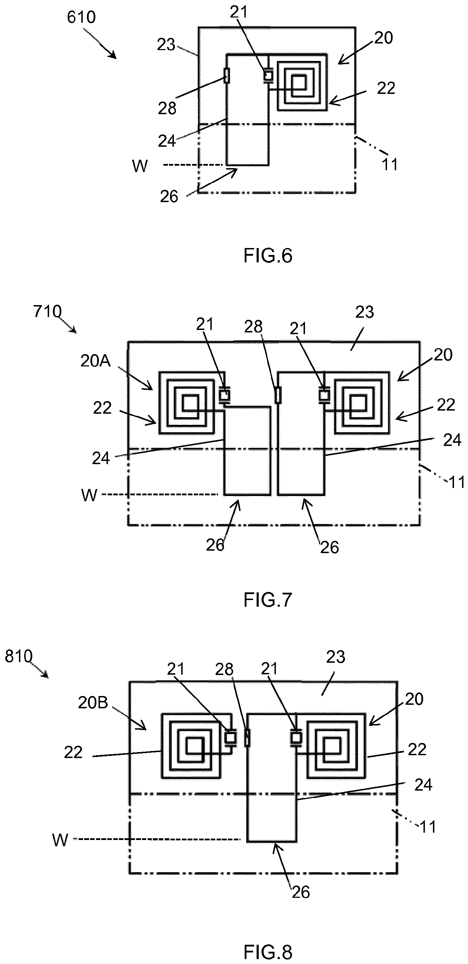

FIG.6-8 zeigen mögliche Ausführungsbeispiele von Funkschaltungen 610, 710, 810, insbesondere für den Anwendungsfall nach FIG.1, wobei nachfolgend nur deren Aufbau und Funktion erörtert wird.

Die Funkschaltungen 610, 710, 810 sind als passive RFID-Transponder ausgeführt zur drahtlosen Kommunikation im UHF-Frequenzbereich des IFM-Bands. Zur möglichst kostengünstigen Herstellung umfassen die RFID-Transponder 20 bzw. 20A-20B nach FIG.6-8 jeweils einen handelsüblichen RFID-Mikrochip 21, hier schematisch als Resonatorsymbol abgebildet, mit dazu passender RFID-Antenne 22.

Der RFID-Mikrochip 21 hat einen Speicher mit Identifikationsinformation und wird jeweils über die RFID-Antenne 22 durch die Sendeleistung des RFID-Lesegeräts 12 versorgt. Die RFID-Transponder 20 bzw. 20A-20B nach FIG.6-8 sind passiv und besitzen keine eigene Energiequelle bzw. gesonderte Stromversorgung.

In FIG.6 sind die Anschlüsse des RFID-Mikrochips 21 an die RFID-Antenne 22 mittels einer Detektorleitung 24 überbrückt bzw. "kurzgeschlossen", d.h. jedenfalls impedanzmässig fehlabgestimmt. Ein Leitungsabschnitt 26 der Detektorleitung 24 ist als Leiterschlaufe im kritischen Bereich 11 so geführt, dass dieser als Detektorelement 26 bei Überschreiten der Verschleißgrenze bricht, d.h. die Detektorleitung 24 unterbrochen wird. Somit wird die ordnungsgemäße Versorgung des RFID-Mikrochips 21 anhand der RFID-Antenne 22 erst freigegeben, wenn die kritische Verschleißgrenze W überschritten ist. Mit anderen Worten, der RFID-Transponder 20 der Funkschaltung 610 wird erst sendebereit, wenn die zu erkennende Verschleißgrenze W erreicht oder überschritten ist. Zur Vermeidung von induktionsbedingter Beschädigung kann die Detektorleitung 24 mit einem niederohmigen Shunt-Widerstand 28 versehen sein. Der eigentliche RFID-Transponder 20, sowie die Detektorleitung 24 mit ihren Bestandteilen können als Erkennungsmodul auf den gleichen Träger 23, beispielsweise einem zerbrechlichen Haftetikett befestigt sein, oder beispielsweise in ein sprödes, bruchempfindliches Material eingegossen werden.

Es kann somit z.B. erst durch die Unterbrechung eine hinreichende Impedanzanpassung (Engl. impedance matching) bzw. ein Aufheben einer bewussten Fehlabstimmung (Fehlanpassung, Engl. mismatch) bewirkt werden. Die verschleissbedingte Impedanzveränderung kann so auch das Verhalten des Transponders verändern bzw. bestimmen.

FIG.7 ist eine Weiterbildung des Prinzips nach FIG.6 und umfasst zwei RFID-Transponder 20; 20A. Der Transponder 20A funktioniert nach dem umgekehrten Prinzip im Vergleich zum Transponder 20. Beim Transponder 20A wird die Versorgung des RFID-Mikrochips 21 im Falle eines Bruchs des Detektorelements 26 an der Detektorleitung 24 nicht freigegeben, sondern unterbrochen. Der RFID-Transponder 20 wiederum ist identisch zum Transponder 20 aus FIG.6 aufgebaut.

Durch die Kombination nach FIG.7 lässt sich eine höhere Erkennungssicherheit erzielen, indem bei Empfang des ordnungsgemäßen Signals des RFID-Transponders 20A und Ausbleiben des Signals des RFID-Transponders 20 auf einen betriebsbereiten Zustand ohne übermäßigen Verschleiß geschlossen werden kann. Umgekehrt signalisiert jedoch ein Auftreten des Signals des RFID-Transponders 20 und Unterbleiben des Signals des RFID-Transponders 20A mit höherer Zuverlässigkeit das Überschreiten der Verschleißgrenze W im kritischen Bereich 11, indem zwei unabhängige Leitungsabschnitte als Detektorelemente 26 verschleißbedingt unterbrochen wurden. Auch hier sind Identifikationsinformationen zur Paarung der RFID-Transponder 20A, 20 und deren Zuordnung zum betroffenen Kettenglied hinterlegt.

In einer nicht gezeigten Variante zu FIG.7 kann - ähnlich wie in FIG.3 - das Detektorelement 26 des einen Transponders 20A, im Vergleich zum Detektorelement 26 des anderen Transponders 20, in Bezug auf die Verschleißgrenze W abgestuft versetzt sein, um eine Zusatzinformation zum Verschleiß und/oder zur Kontrolle zu gewinnen.

FIG.8 zeigt ein weiteres Ausführungsbeispiel mit zwei RFID-Transpondern 20; 20B, wobei ein Prüf-Transponder 20B lediglich zu Kontrollzwecken als Dauerprobe vorgesehen ist, und sein Sendeverhalten nicht verschleiß- oder abnutzungsabhängig verändert. Der andere RFID-Transponder 20 ist identisch bzw. prinzipgleich zum Transponder 20 gemäß FIG.6-7 ausgeführt. In einer nicht gezeigten Variante zu FIG.8 kann - ähnlich wie in FIG.3 - der Prüf-Transponder 20B, mit einem Teil seiner Antenne als Sollbruchstelle im kritischen Bereich 11 angeordnet sein, sodass das eine weitere Verschleißgrenze erfassbar ist, z.B. für einen Nothalt.

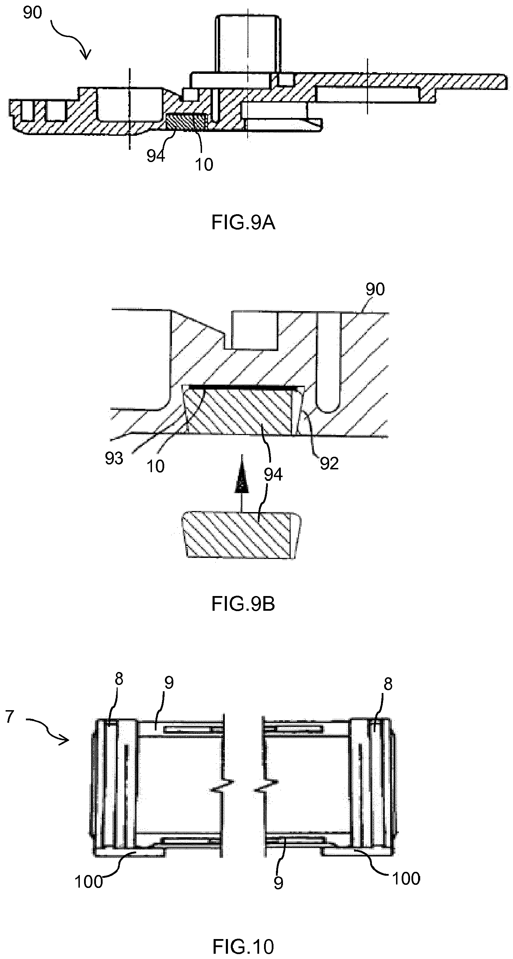

FIG.9A-9B zeigen eine Möglichkeit zum geschützten Anordnen einer Funkschaltung 10 in der Seitenlasche 90 eines mehrteilig aufgebauten Kettenglieds 7. Es werden nur die zur vorbekannten Bauweise der Seitenlasche 90 relevanten Unterschiede erörtert. An der äußeren Seitenfläche der Kettenlasche 90 ist eine Aussparung 92 mit einer nach außen hin verjüngten Kontur mit schief laufenden Seitenwänden 93 vorgesehen, deren Grundfläche zur Aufnahme der Funkschaltung 10 dimensioniert ist. Die Aussparung 92 ist dabei im kritischen Bereich 11 der Seitenlasche 90 vorgesehen, beispielsweise an der abriebanfälligen, der Umlenkachse zugewandten Schmalseite der Kettenlasche 90. Nach Anbringen der Funkschaltung 10 wird die Aussparung 92 anhand eines geeigneten Verschlusselementes 94 verschlossen. Das Verschlusselement 94 wird durch die schrägen Seitenwände 93 der Aussparung 92 formschlüssig und unter Vorspannung gehalten, so dass die Position der Funkschaltung 10 unveränderbar festgelegt ist. Mit dieser Anordnung kann z.B. eine Funkschaltung 10 in einem bruchanfälligen Gehäuse als Erkennungsmodul betriebssicher verwendet werden. Die Funkschaltung kann auch in das Verschlusselement 94 integriert sein. An Gliedern ohne Funkschaltung 10 können die Aussparungen 92 offen bleiben oder zur Vermeidung von Störkanten mit weiteren Verschlusselementen verschlossen sein.

FIG.10 zeigt ein weiteres Ausführungsbeispiel zur Anordnung von Funkschaltungen 10 anhand eines schematischen Querschnitts eines Kettenglieds 7. Die beiden Seitenlaschen 8 des Kettenglieds 7 sind über Querstege 9 miteinander verbunden und bilden so den Innenraum zur Aufnahme der geführten Leitungen. An der verschleißanfälligen Schmalseite beider Seitenlaschen 8 und/oder am verschleißseitigen Quersteg 9 sind nachrüstbare Gleitschuhe 100 als Erkennungsmodule befestigt, in denen die Funkschaltung 10 (nicht gezeigt in FIG.10) eingegossen ist, beispielsweise im IMKS-Verfahren (Integriertes Metall Kunststoff Spritzgießen) oder im Mehrkomponenten-Spritzguss, oder stoffschlüssig durch Kleben befestigt ist.

Die Bauweise nach FIG.10 ermöglicht das bedarfsweise Nachrüsten von Energieführungsketten 1 je nach Lage der kritischen Kettenabschnitte 14 und den Aufbau der erfindungsgemäßen Verschleißerkennung im Baukastenprinzip, ohne die eigentliche Gestaltung der Kettenglieder 7 zu beeinträchtigen.

Geeignete Systeme und Verfahren zur funkbasierten Erfassung von Transpondern sind dem Fachmann aus der Fachliteratur und einschlägigen Normen (z.B. ISO 18000-1 bzw. IEC 18000-6C oder dgl.) bekannt und werden daher nicht näher erläutert.

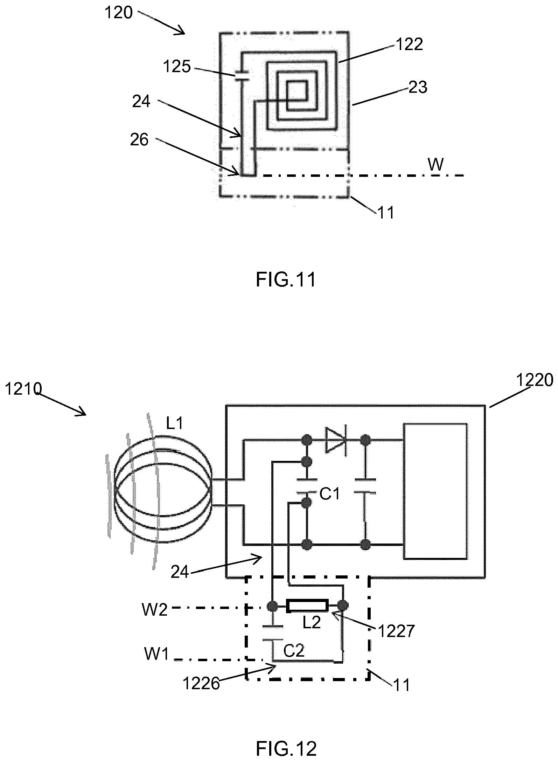

FIG.11 zeigt eine besonders einfache Funkschaltung in Form eines RF-Transponders 120, wobei ein für Warensicherung (EAS: electronic article surveillance) bekannter LC-Schwingkreis, z.B. für modifiziert wurde durch eine Detektorleitung 24, die eine Schlaufe im kritischen Bereich 11 bildet, welche als Detektorelement 26 dient. Im betriebsbereiten Zustand entzieht der Schwingkreis aus RF-Induktionsantenne 122 und RF-Kondensator 125 einem äußeren elektromagnetischen HF-Feld, das auf seine Resonanzfrequenz abgestimmt ist - typischerweise um 8,2 MHz - Sendeenergie und ist so nachweisbar. Zum Verändern des Verhaltens des RF-Transponders 120 unterbricht das Detektorelement 26 die Verbindung zwischen der RF-Induktionsantenne 122 und dem RF-Kondensator 125, wenn die Abnutzung die Verschleißgrenze W überschreitet. Damit wird der Schwingkreis unwirksam und der RF-Transponder 120 nicht mehr bei der Resonanzfrequenz nachweisbar. Als Träger 23 kommt insbesondere eine Sonderanfertigung eines Haftetiketts in Betracht, das einen bruchanfälligen kritischen Bereich 11 als Substrat für die das Detektorelement 26 bildende Leiterschlaufe umfasst. Die anderweitigen Merkmale des RF-Transponders 120 können der Lehre aus US 3,810,147 oder US 3,500,373 entsprechen. Die besonders kostengünstige Bauweise nach FIG.11 ist insbesondere bei sehr hohen Stückzahlen vorteilhaft.

FIG.12 zeigt eine Weiterbildung der RFID-Schaltungen nach FIG.6-8, dahingehend, dass die Funkschaltung 1210 nach FIG.12 im Neuzustand betriebsbereit ist, bei Überschreiten einer ersten Verschleißgrenze W1 nicht betriebsbereit ist und bei Überschreiten einer zweiten Verschleißgrenze W2 wieder betriebsbereit wird. Zum Verändern des Funkverhaltens ist an die Detektorleitung eine Leiter mit einer Parallelschaltung eines Störkondensators C2 und einer Störspule L2 angeschlossen. Als erstes Detektorelement 1226 wirkt eine Leiterschlaufe in Serie zum Störkondensator C2, welche den Störkondensator C2 abkoppelt, wenn die Abnutzung die erste Verschleißgrenze W1 überschreitet. Als zweites Detektorelement 1227 wirkt die Störspule selbst, die durch Abrieb auf der Verschleißgrenze W2 zerstört wird.

Die Parallelschaltung mit L2 und C2 an der Detektorleitung 24 beeinträchtigt aufgrund einer geringen Impedanz von C2 zunächst den Resonanzschwingkreis nur unwesentlich, sodass der RFID-Transponder 1220 im unbeeinträchtigten Neuzustand im Wesentlichen betriebsbereit und bei der Resonanzfrequenz Leistung aufnimmt, um den RFID-Chip zu versorgen. Nach Trennen der parallelen Verbindung des Störkondensators C2 wirkt nur noch die Störspule L2. Deren Impedanz ist so gewählt, dass der Resonanz-Schwingkreis mit dem Resonanzkondensator C1 und der als Antenne dienenden Resonanzspule (Antenne) L1 verstimmt ist und nicht mehr im Frequenzbereich des Lesegeräts (FIG.1) resonant anspricht. Somit ist der RFID-Transponder 1220 funktionsunfähig in Bezug auf das Lesegerät. Für die Werte der Impedanzen gilt hierbei: (a) C2 << C1 und (b) L2 << L1 * (C1/C2). Erreicht die Abnutzung die zweite Verschleißgrenze W2, wird die Störspule L2 unwirksam und daher die Verstimmung des Schwingungs-Tilgers wieder aufgehoben. Damit wird der RFID-Transponder 1220 wieder bestimmungsgemäß betriebsfähig.

Eine mehrstufig gestaffelte Detektoranordnung wie in FIG.3 oder FIG.12 hat den Vorteil, dass das System zu Beginn eine Funktionsprüfung erlaubt und vor allem vollautomatisch konfiguriert werden kann, indem es selbsttägig die Identifikationsinformationen aller vorhandenen Funkschaltungen 1210 aufnimmt. Bleibt die Rücksendung einer zuvor erfassten Identifikationsinformation im späteren Betrieb aus, ist auf Überschreiten einer Verschleißgrenze zu Schließen.

FIG.12 hat den weiteren Vorteil, dass - ohne Vervielfachung der Funkschaltungen 1210 - zuverlässig von einem überkritischen Verschleiß ausgegangen werden kann, wenn die betroffene Identifikationsinformation nach einem gewissen Zeitintervall erneut wieder erfasst wird. Vorzugsweise wird ein Notstopp ausgelöst, da die abgenutzte Leitungsführung noch nicht erneuert bzw. repariert wurde.

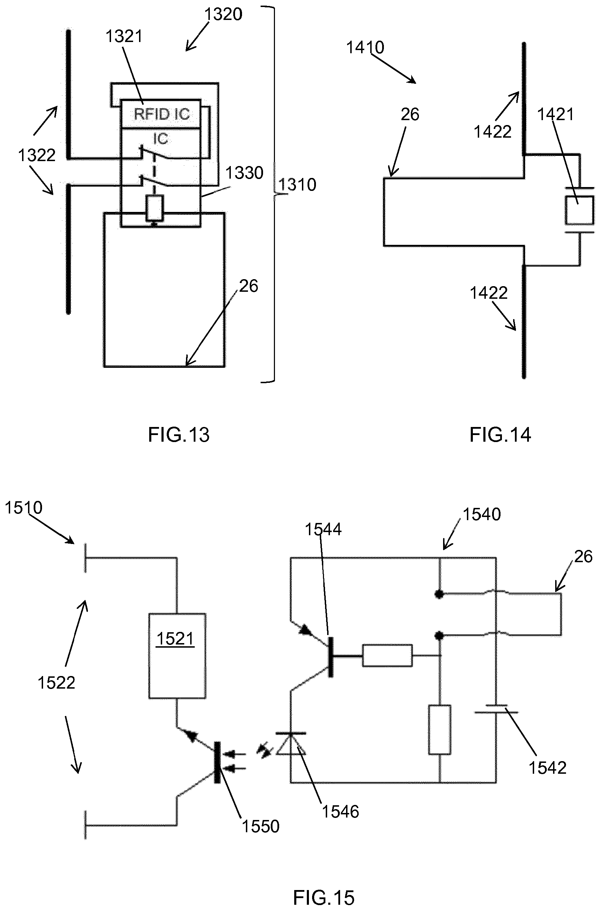

FIG.13-FIG.15 zeigen weitere Ausführungsbeispiele von Funkschaltungen 1310; 1410; 1510 für RFID-ICs mit Dipolantennen für den UHF-Frequenzbereich, z.B. nach ISO 18000-6C. Diese bieten u.a. eine höhere Reichweite als LF- oder RF-Funkschaltungen (z.B. nach FIG.6-8 oder FIG.11) und sind auch als passive Erkennungsmodule günstig herstellbar. Die Wirkweise und Anordnung an der Leitungsführung entspricht z.B. einem der vorstehenden Beispiele.

In der Funkschaltung 1310 nach FIG.13 ist eine Dipolantenne 1322 über einen speziellen IC 1330 (integrierter Schaltkreis), z.B. ein ASIC, so schaltbar, dass sie von der RFID-Schaltung 1321 in der Art eines Schaltrelais galvanisch getrennt oder mit dieser verbunden werden kann. Hierzu hat der IC 1330 eine Transistoranordnung, welche beide Knoten der Dipolantenne 1322 verbindet, wenn eine als Detektorelement 1326 genutzte Leiterschlaufe durchtrennt wird. Das Detektorelement 1326 ist mit Anschlüssen des IC 1330 verbunden, welche die relaisähnliche Transistoranordnung steuern. Die RFID-Schaltung 1321 kann als integrierter Bestandteil des ICs 1330 ausgeführt sein. Die Funkschaltung 1310 kann aktiv sein, d.h. mit einer Versorgung verbunden sein, oder ggf. auch passiv über die Dipolantenne 1322 aus der Funkleistung versorgt werden.

In FIG.14 ist eine Dipolantenne 1422 mit einer als Detektorelement 26 verwendeten Leiterschlaufe gebrückt. Hierdurch werden die Leistungsparameter der Dipolantenne 1422 auf messbare Weise beeinflusst, so dass ein Auftrennen des Detektorelements 26 durch Verschleiß anhand eines geeigneten Lesegeräts (vgl. FIG.1 bzw. FIG.4) erkennbar ist. Im UHF-Frequenzbereich führt ein "Kurzschluss" (anders als bei einer Induktionsantenne nach FIG.6) nicht zwingend zum Ausfall des Funksignals, aber zu einer nachweisbaren Parameterveränderung im Funkverhalten, das der RFID-Chip 1421 mit der Dipolantenne 1422 bewirkt. Die Funkschaltung 1410 nach FIG.13 eignet sich als rein passives System.

In der Funkschaltung 1510 nach FIG.15 ist ebenfalls eine Dipolantenne 1522 an einen RFID-Chip 1521 angeschlossen. Eine aktive Detektorschaltung 1540 mit einer Spannungsquelle 1542 umfasst als Detektorelement 26 auch hier eine durch Verschleiß trennbare Leiterschlaufe zur Anordnung in einem verschleißkritischen Bereich. Wenn das Detektorelement 26 aufgetrennt wird, schaltet der pnp-Transistor 1544 auf Durchgang, sodass die LED 1546 Licht erzeugt und in Art eines Optokopplers, den NPN-Fototransistor 1550 schaltet, sodass die Dipolantenne 1522 an beiden Anschlüssen des RFID-Chips 1521 niederohmig verbunden ist. Es kann hierzu auch ein herkömmlicher Optokoppler verwendet werden. Bei einem Unterbruch im Detektorelement 26 schaltet die Detektorschaltung 1540 somit die Verbindung der Dipolantenne 1522 mit dem RFID-Chip 1521 frei, d.h. den RFID-Chip 1521 in Betriebsbereitschaft. Die Funkschaltung 1510 ist als aktives System geeignet, wobei die Spannungsquelle 1542 auch den RFID-Chip 1521 versorgen kann (nicht gezeigt).

Abschließend ist anzumerken, dass RFID-Transponder mit IC und Informationsspeicher anders als 1-Bit-Transpondern (vgl. FIG.11) intelligentere Systeme ermöglichen, die u.a. eine Bestimmung der betroffenen Energieführungskette 1 in komplexeren Anlagen, eine nähere Lokalisierung des verschlissenen Kettenglieds, und beispielsweise auch die Verwendung mehrerer Detektorelemente an einem RFID-Chip (nicht gezeigt) erlauben, z.B. zur zuverlässigeren Erkennung.

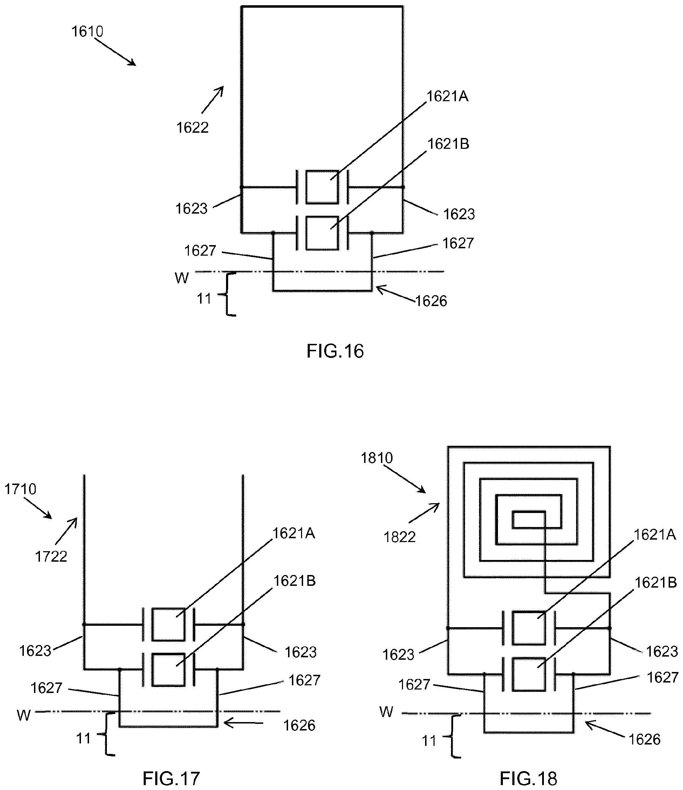

FIG.16-18 zeigen eine Weiterbildung des Prinzips nach FIG.6-8. Durch eine Anordnung nach FIG.16-18 lässt sich eine höhere Erkennungssicherheit erzielen, indem bei Empfang des ordnungsgemäßen Signal eines ersten RFID-Transponders und Ausbleiben des Signals eines zweiten RFID-Transponders auf einen betriebsbereiten Zustand ohne übermäßigen Verschleiß geschlossen werden kann.

Umgekehrt signalisiert jedoch ein Auftreten des Signals des zweiten RFID-Transponders (mit oder ohne Unterbleiben des Signals des ersten RFID-Transponders) mit höherer Zuverlässigkeit das Überschreiten der Verschleißgrenze W im kritischen Bereich 11 (FIG.1-8).

FIG.16-18 zeigen drei weitere Ausführungsbeispiele von Funkschaltungen 1610; 1710; 1810, die sich von den vorstehenden Beispielen insbesondere dadurch unterscheiden, dass der Transponder bei jedem Ausführungsbeispiel jeweils zwei RFID-Chips 1621A, 1621B aufweist, die beide mit einer einzigen gemeinsamen Antenne verbunden 1622; 1722; 1822 sind.

In den Funkschaltungen 1610; 1710; 1810 ist im Neuzustand und bis zum kritischen Verschleiß, z.B. bei Überschreitung der Verschleißgrenze W, zunächst nur der erste RFID-Chip 1621A empfangs- und sendebereit. Erst wenn das Detektorelement 1626 durch übermäßigen Verschleiß, z.B. wegen mechanischem Abrieb über die Verschleißgrenze W hinaus, aufgetrennt bzw. entfernt wird, ist auch der zweite RFID-Chip 1621B praktisch empfangs- und sendebereit. Die RFID-Chips 1621A, 1621B können gleicher Bauart sein, die Kennungen bzw. Identifikationsinformationen der RFID-Chips 1621A, 1621B unterscheiden sich jedoch voneinander. Somit erlaubt der erste RFID-Chip 1621A zunächst eine Funktionsüberprüfung der Funkschaltungen 1610; 1710; 1810 z.B. dahingehend, ob die Verschleisserkennung vorgesehen und/oder betriebsbereit ist. Diese Überprüfung erfolgt anhand der vorbekannten Kennung des ersten RFID-Chips 1621A. Diese wird vom Lesegerät empfangen, und ist z.B. in einer Datenbank hinterlegt. Diese erste Kennung kann auch anderweitig, z.B. zu Logistikzwecken oder für eine Erkennung der Systemkonfiguration, genutzt werden.

Der erste RFID-Chip 1621A kann leitend (galvanisch) oder induktiv mit der Antenne 1622; 1722 bzw. 1822 verbunden sein. Die Funkschaltungen 1610; 1710 bzw. 1810 können insbesondere als PCB oder als FPC realisiert sein, wobei die Antennen 1622; 1722 bzw. 1822 als Leiterbahnen ausgeführt sind. Die verwendeten RFID-Chips 1621A, 1621B sind zur Systemvereinfachung vorzugsweise baugleich, z.B. geeignete handelsübliche integrierte Schaltungen (ICs), vorzugsweise in SMD- bzw. für SMT-Technik.

Der zweite RFID-Chip 1621B ist in FIG.16-18 über eine Übertragungsleitung 1623 mit der gemeinsamen Antenne 1622; 1722 bzw. 1822 leitend verbunden. Zur verschleißbedingten Veränderung des Funkverhaltens des zweiten RFID-Chips 1621B ist parallel an der Übertragungsleitung 1623 eine Blindleitung bzw. Stichleitung 1627 (engl. "stub") leitend angeschlossen. Die Stichleitung 1627 dient als Detektorleitung und ist im gezeigten Beispiel als Zweidrahtleitung, z.B. ähnlich einem sog. "single shunt stub tuner", ausgeführt und über einen im kritischen Bereich 11 liegenden Leiterabschnitt kurzgeschlossen (KS-Stichleitung). Dieser Leiterabschnitt im kritischen Bereich 11 bildet das Detektorelement 1626, wie in FIG.16-18 gezeigt. Die Stichleitung 1627 kann alternativ offen bzw. leerlaufend sein (LL-Stichleitung nicht gezeigt), jedoch mit im kritischen Bereich 11 exponierten Leiterabschnitten, die bei übermäßigen Verschleiß über die Verschleißgrenze W hinaus abgetrennt werden, und hierdurch als Detektorelement 1626 dienen. Wenngleich die Bauweise nach FIG.16-18 einfach zu realisieren ist, liegt z.B. auch eine Doppel-Stichleitung (analog zum sog. "Double Shunt Stub Tuner") oder ein ausgeprägtes Anpassungsnetzwerk im Rahmen der Erfindung, z.B. um jegliche Beeinflussung des ersten RFID-Chips 1621A zu minimieren.

Die Leiterbahnabmessungen des Abschnitts, der das Detektorelement 1626 bildet, und die Leiterbahnabmessungen der nach übermäßigem Verschleiß verbleibenden Leiterbahnabschnitte der Stichleitung 1627 sind dabei in einem vorbestimmten Verhältnis eingestellt. Die Einstellung erfolgt einerseits so, dass im Neuzustand eine hinreichende Fehlanpassung, insbesondere Impedanz-Fehlanpassung, die Empfangs- und Sendebereitschaft des zweiten RFID-Chips 1621B so stark stört, dass dieser nicht effektiv mit dem Lesegerät kommunizieren kann. Insbesondere kann die Stichleitung 1627 mit dem Detektorelement 1626 die passive Versorgung und/oder Sendeleistung des RFID-Chips 1621B zu einem hinreichenden Grad gezielt verschlechtern. Andererseits kann das Verhältnis zudem so eingestellt sein, dass nach Abtrennen des Detektorelements 1626 eine hinreichende Anpassung, insbesondere Impedanz-Anpassung, der Übertragungsleitung 1623, welche die Antenne 1622; 1722 bzw. 1822 mit dem zweiten RFID-Chip 1621B verbindet, vorliegt. Die Stichleitung 1627 kann im Zustand ohne das Detektorelement 1626 bzw. ohne leitende Verbindung hierzu insbesondere zur weitgehenden Leitungsanpassung bzw. Impedanz-Anpassung in Bezug auf die zusätzliche Übertragungsleitung 1623 am zweiten RFID-Chip 1621B führen. Als weiterer Parameter kann entsprechend diesen Vorgaben auch die Position des Anschlusspunkts der Stichleitung 1627 an der Übertragungsleitung 1623 selbst eingestellt sein. Die verschleißbedingte Veränderung der Impedanz-Anpassung (Engl. "deterioration-dependent change in impedance-matching") erfolgt hierbei in Bezug auf die zusätzliche Übertragungsleitung 1623 zwischen Antenne 1622; 1722; 1822 und dem zweiten RFID-Chip 1621B. Die absoluten Leitungslängen von Stichleitung 1627 und Detektorelement 1626 sind über einen gewissen Bereich einstellbar, weil sich die Verhältnisse im Wesentlichen periodisch mit der halben Betriebswellenlänge (λ) wiederholen. Eine Verlängerung um n*λ/2 (mit n ganzzahlig) ist bei im Wesentlichen gleichbleibendem Verhalten möglich.

Ohne die Erfindung an eine bestimmte Theorie zu binden, kann die Reflexion am Anschlusspunkt der Stichleitung 1627 in Bezug auf den ersten RFID-Chip 1621A durch geeignete Wahl der Gesamtlänge der Übertragungsleitung 1623 und der Position von deren Anschlusspunkt an die Stichleitung 1627 so eingestellt werden, dass das Sendeverhalten des ersten RFID-Chips 1621A von der verschleißbedingte Zustandsänderung nicht relevant beeinträchtigt ist, sodass z.B. die Reichweite bzw. Sendeleistung des ersten RFID-Chips 1621A im Neuzustand und im kritischen Verschleisszustand nur unwesentlich verändert. Ungeachtet dessen kann (analog zum Prinzip nach FIG.7) alternativ vorgesehen sein, dass bei kritischem Verschleiß der zweite RFID-Chip 1621B empfangs- und sendebereit wird, und der erste RFID-Chip 1621A praktisch ausfällt, was ebenfalls eine Funktionsüberprüfung im unkritischen Zustand erlaubt.

Bei Verschleiß nahe bzw. an der Verschleißgrenze W wird der zweite RFID-Chip 1621B empfangs- und sendebereit wegen der eintretenden Anpassung, bedingt durch Wegfall der Störung bzw. Fehlanpassung aufgrund des Detektorelements 1626. Somit kann das Lesegerät die weitere Kennung des zweiten RFID-Chips 1621B empfangen, was den Rückschluss auf kritischen Verschleiß ermöglicht. Auch die vorbekannte Kennung des zweiten RFID-Chips 1621B kann hierzu gespeichert z.B. in einer Datenbank hinterlegt sein.

Das Detektorelement 1626 ist in einem räumlich von den RFID-Chips 1621A, 1621B und der gemeinsamen Antenne 1610; 1710 bzw. 1810 getrennten Bereich, z.B. an einem der Antenne 1610; 1710 bzw. 1810 gegenüberliegenden Ende des PCB bzw. FCB und ggf. rückseitig angeordnet.

Die Ausführungsbeispiele nach FIG.16-18 eignen sich besonders für Transponder bzw. RFID-Chips 1621A, 1621B im Hochfrequenzbereich z.B. bei UHF, insbesondere für UHF-RFID, z.B. mit einer Grundfrequenz von 865MHz bis 955MHz oder 2.4 GHz (mit Wellenlängen im Dezimeterbereich). Das Prinzip der verschleißbedingten Veränderung der Leitungsanpassung bei der Grundfrequenz als Detektionsprinzip ist analog auf ein Ausführungsbeispiel nach FIG.6-8 übertragbar. Mit leerlaufenden oder kurzgeschlossenen Stichleitungen geeignet gewählter Länge können grundsätzlich induktive oder kapazitive Blindwiderstände quasi von Null bis Unendlich eingestellt werden. Die Impedanz-Fehlanpassung bzw. die optionale Anpassung erfolgt dabei insbesondere durch die geeignete Einstellung des Blindwiderstandes anhand der Detektorleitung, z.B. durch die Kurzschluss-Stichleitung 1627. Die Dimensionierung der Leiterbahnabmessungen des Detektorelements 1626 und der Stichleitung 1627 und die Bestimmung des Anschlusspunkts können z.B. mithilfe des Smith-Diagramms in an sich bekannter Weise erfolgen.

Die Funkschaltungen 1610; 1710; 1810 nach FIG.16-18 unterscheiden sich untereinander durch die Art der verwendeten Antenne. Die Funkschaltung 1610 in FIG.16 hat eine Schleifendipol-Antenne 1622, die Funkschaltung 1710 in FIG.17 hat eine Dipol-Antenne 1722. Letztere bieten eine platzsparende Bauweise. Die Funkschaltung 1810 in FIG.18 hat eine Antennenspule 1822 für ggf. höhere Reichweite. Die Antennen 1622; 1722; 1822 sind jeweils passend zur gewählten Grundfrequenz bzw. den gewählten RFID-Chips 1621A, 1621B dimensioniert.

Neben einer reinen Stichleitung 1627 als Detektorleitung, d.h. einer Impedanzanpassung vom Leitertyp, kommen auch Anpassungsschaltungen mit diskreten Komponenten in Betracht, z.B. ein Impedanzanpassungs-Netzwerk vom L-Typ, vom n-Typ, P-Typ.

Die Detektorleitung mit dem Detektorelement 1626 kann auch als Trenn- bzw. Filterschaltung die Hochfrequenz(HF)-Signale im Betriebsband der RFID-Chips 1621A, 1621B herauszufiltern. Dies kann z.B. nach dem Prinzip eines Reihenresonanzkreis gegen Masse, einer offenen Viertelwellenlängen-Blindleitung oder einer kurzgeschlossene Halbwellenlängen-Blindleitung erfolgen, wobei dieser Schaltungsteil so konfiguriert wird, dass ein vorbestimmtes Ausmaß von Verschleiß im kritischen Bereich 11 die Trennung bzw. Filterwirkung weitgehend aufhebt.

Es ist anzumerken, dass RFID-Transponder mit IC und Informationsspeicher, anders als 1-Bit-Transponder (vgl. FIG.9), intelligentere Systeme ermöglichen, die u.a. eine Bestimmung der bzw. des betroffenen Bauteils in komplexeren Anlagen, z.B. eine nähere Lokalisierung des verschlissenen Kunststoffteils und beispielsweise auch die Verwendung mehrerer Detektorelemente an einem RFID-Chip (nicht gezeigt) erlauben, z.B. zur zuverlässigeren Erkennung. Auch die Funktionsprüfung, z.B. nach FIG.16-18, wird durch eindeutig zuordenbare Identifikationsinformation ermöglicht.

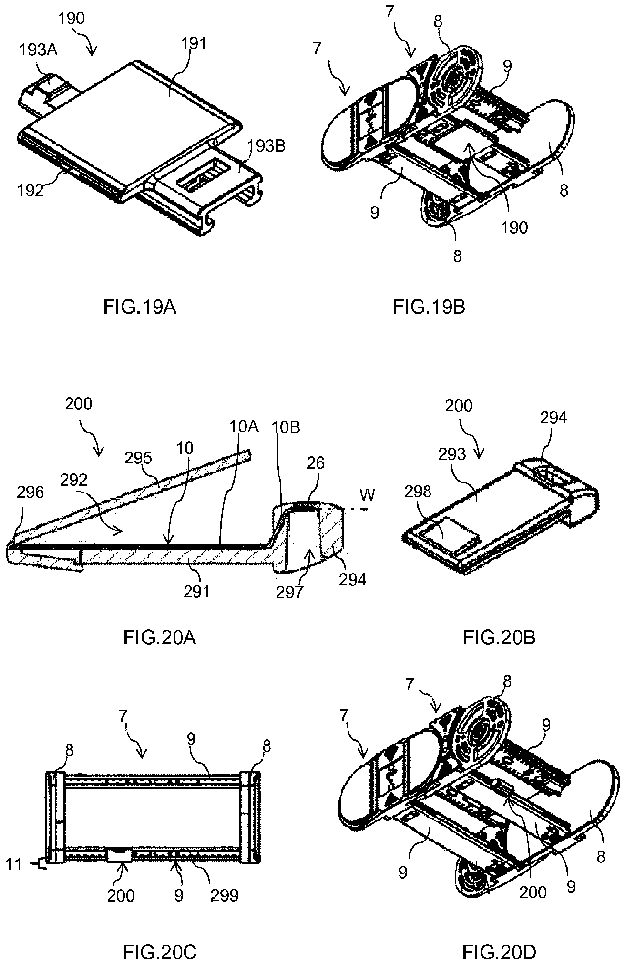

FIG FIG.19A-19B zeigen ein Erkennungsmodul 190 zum Erstausrüsten oder Nachrüsten von Energieführungsketten 1 bekannter Bauart. Das Erkennungsmodul 190 hat ein einteilig als Spritzgussteil hergestelltes Kunststoff-Gehäuse 191 mit einer plattenartigen, flächigen Aufnahme 192 für einen gängigen RFID-Transponder. Der Transponder wird durch einen stirnseitigen Öffnungsschlitz in die Aufnahme 192 eingeschoben und anschließend beispielsweise durch Vergießen oder Kleben am Gehäuse 191 gesichert wird. Zum Einbau in ein Kettenglied 7 hat das Gehäuse 191 einen ersten männlichen Verbinder 193A und einen in Längsrichtung gegenüberliegenden zweiten weiblichen Verbinder 193B. Der erste Verbinder 193A ist baugleich zum Befestigungshorn, das zur lösbaren Befestigung des Querstegs 9 bzw. Öffnungsstegs typisch an den Seitenlaschen 8 der Kettenglieder 7 angeformt ist, d.h. hat eine zur entsprechenden Verbinder-Aufnahme am Quersteg 9 passende Positivform. Der zweite Verbinder 193B ist baugleich zur Verbinder-Aufnahme am Quersteg 9, d.h. hat eine zum Befestigungshorn der Seitenlasche 8 passende Negativform. Somit kann das Erkennungsmodul 190 anstelle eines typischen Querstegs 9 montiert werden, ggf. unter Verwendung eines kürzeren Querstegs als Verlängerungsstück, wie FIG.19B zeigt. Die Position der Aufnahme 192 ist dabei um ein vorbestimmtes Maß in Höhenrichtung der Seitenlaschen 8 nach außen vorstehend versetzt, so dass die Funkschaltung (hier nicht gezeigt) an der gewünschten, zu erkennenden Verschleißgrenze W liegt.

FIG.20A-20D zeigen als weitere Fortbildung der Erfindung ein Erkennungsmodul 200, das ebenfalls zum Nachrüsten oder Erstausrüsten von Kettengliedern 7 einer bekannten Energieführungskette 1 besonders gut geeignet ist. Das Erkennungsmodul 200 hat ein Gehäuse 291 aus Kunststoff mit einem flachen, plattenartigen Hauptteil 293 und einem quer zu dessen Hauptebene vorspringenden Kopf 294. Der Hauptteil 293 kann über einen Klappdeckel 295 mittels einem Filmscharnier 296 geöffnet werden, um die Funkschaltung 10 in eine entsprechende Aufnahme 292 des Gehäuses 291 einzubringen. Ferner hat das Gehäuse 291 eine Rastzunge 298 zum Einrasten in eine Ausnehmung 299 im Quersteg 9, die in Längsrichtung der Energieführungskette 1 durchgeht. Derartige Ausnehmungen 299 sind typischerweise rasterartig vorgesehen, um bekannte Trennstege (nicht gezeigt) zur Innenaufteilung in vorbestimmten Abständen an herkömmlichen Querstegen 9 anzubringen. Diese Ausnehmungen 299 können zum Befestigen des Erkennungsmoduls 200 genutzt werden. Dementsprechend ist der geschlossene Hauptteil 293 zur Ausnehmung 299 des Querstegs 9 passend als Einsteck-Lasche bzw. -Zunge ausgeführt, und kann wie FIG20C-20D veranschaulichen, so einfach eingebaut werden. Die Rastzunge 298 verrastet mit dem Quersteg 9, um das Erkennungsmodul 200 an diesem zu sichern.

Die Funkschaltung 10 in FIG.20A-20D hat eine besonders bevorzugte zweiteilige Bauweise, mit einem ersten Schaltungsteil 10A und einem flexiblen zweiten Schaltungsteil 10B. Im ersten Schaltungsteil 10A ist zumindest die integrierte Schaltung bzw. der Mikrochip des RFID-Transponders (s. oben) auf einem starren Substrat bzw. Träger als konventionelle Schaltung vorgesehen. Der zweite Schaltungsteil 10B ist flexibel ausgeführt, z.B. als FCB, "Flexprint", Folienschaltung oder dgl. Der zweite Schaltungsteil 10B umfasst das erfindungsgemäße Detektorelement 26 in einem vom ersten Schaltungsteil 10A räumlich abgesetzten, zu dessen Hauptebene quer versetzten Raumbereich und die Detektorleitung zum ersten Schaltungsteil 10A. Im Kopf 294 des Erkennungsmoduls 200 ist eine Aussparung 297 vorgesehen, anhand welcher das Detektorelement 26 im zweiten Schaltungsteil 10B positioniert und befestigt, z.B. vergossen oder geklebt werden kann, so dass dessen Raumlage die zu erfassende Verschleißgrenze W vorbestimmt. Durch die Dimensionierung, insbesondere Bauhöhe des Kopfes 294, kann so die Position des Detektorelements 26 und damit auch der Verschleißgrenze W relativ zur nominalen Lage des Querstegs 9 wahlweise definiert werden. Der flexible Schaltungsteil 10B ermöglicht die abgesetzte, vorspringende Positionierung des Detektorelements 26. Der Bereich des Kopfes 294 mit dem Detektorelement 26 wird dem Verschleiß ausgesetzt und dient als eine Art Sollbruchstelle.

Das Erkennungsmodul 200 weist somit einen mechanischen Verbinder auf, der mit einem an sich bekannten Gegenstück der Energieführungskette zusammenwirkt, z.B. der Ausnehmung 299 zum Befestigen von Trennstegen (nicht gezeigt) am Quersteg 9. Erkennungsmodule 190, 200 gemäß FIG.19-20 erlauben das einfache und gezielte Ausrüsten einer dynamischen Leitungsführung 1 mit der Funktionalität einer elektrotechnischen Verschleißerkennung in kritischen Längsabschnitten 14. Das Gehäuse 192, 292 der Erkennungsmodule 190, 200 ist vorzugsweise aus einem weniger verschleißfesten, insbesondere weicheren Kunststoff hergestellt als die Seitenlaschen 8 der Kettenglieder 7.

FIG.21A-21B zeigen, als Alternative zur Bauweise nach FIG.1-4, eine dynamische Leitungsführungseinheit 211, die in Längsrichtung abschnittsweise aus einer Reihe mehrerer einstückig hergestellter Segmente 217 zusammengesetzt ist. Die benachbarten Segmente 217 sind in Längsrichtung jeweils durch ein Filmscharnier 219 flexibel miteinander verbunden. Die Bauweise der Leitungsführungseinheit 211 ist an sich bekannt, z.B. aus WO 2005/040659 A1. In dieser Ausführungsform ist ebenfalls eine Funkschaltung 210 zur Erkennung von Verschleiß in einem kritischen Bereich 11 derjenigen Segmente 217 vorgesehen, welche besonders anfällig sind für Abnutzung und/oder Ermüdungsbruch. Hier ist die Funkschaltung 210 in Form eines selbstklebenden RFID-Tag an der im Umlenkbogen radial innenliegenden Unterseite ausgewählter Segmente 217 angebracht. Wenn die Abnutzung die Verschleißgrenze W überschreitet wird die Funkschaltung 210 ebenfalls verschleißen und damit unwirksam. Hierbei kann z.B. die Antenne selbst das Detektorelement darstellen und ein preiswertes RFID-Tag eingesetzt werden.

**Bezugszeichenliste**

| | |
|---|---|
| FIG.1-5 | FIG.10 |
| 1 Energieführungskette | 7 Kettenglied |
| 2 Obertrum | 8 Seitenlasche |
| 3 Untertrum | 9 Querstege |
| 4 Umlenkbogen | 100 Gleitschuh |
| 5 Mitnehmer | |
| 6 Festpunkt | FIG.11 |
| 7 Kettenglied | 11 kritischer Bereich |
| 8 Seitenlasche | 24 Detektorleitung |
| 10 Funkschaltung | 26 Detektorelement |
| 11 kritischer Bereich | 120 RF-Transponder |
| 12 RFID-Lesegerät | 122 RF-Induktionsantenne |
| 14 kritischer Kettenabschnitt | 125 RF-Kondensator |
| 15 Laschenbruch bzw. | 23 Träger |
| Laschenriss | W Verschleißgrenze |
| (Materialermüdung) | |
| W Verschleißgrenze | FIG.12 |
| | 24 Detektorleitung |
| FIG.6-8 | 1210 Funkschaltung |
| 11 kritischer Bereich | 1221 RFID-Chip |
| 20, 20A, 20B RFID-Transponder | 1226, 1227 Detektorelemente |
| 21 RFID-Mikrochip | 1220 RFID-Transponder |
| 22 RFID-Antenne | C1 Resonanzkondensator |
| 23 Träger | L1 Resonanzspule (Antenne) |
| 24 Detektorleitung | C2 Störkondensator |
| 26 Detektorelement | L2 Störspule |
| 28 Shunt-Widerstand | W1, W2 Verschleißgrenzen |
| 610, 710, 810 Funkschaltung | |
| W Verschleißgrenze | FIG.13 |
| | 26 Detektorelement |
| FIG.9A-9B | 1310 Funkschaltung |
| 10 Funkschaltung | 1321 RFID-Chip |
| 90 Seitenlasche | 1320 RFID-Transponder |
| 92 Aussparung | 1322 Dipolantenne |
| 93 Seitenwand | 1330 IC |
| 94 Verschlusselement | |
| FIG.14 | FIG.20A-20D |
| 26 Detektorelement | 10 Funkschaltung |
| 1410 Funkschaltung | 10A erster Schaltungsteil |
| 1421 RFID-Chip | 10B zweiter Schaltungsteil |
| 1422 Dipolantenne | 26 Detektorelement |
| | 200 Erkennungsmodul |
| FIG.15 | 291 Gehäuse |
| 26 Detektorelement | 292 Aufnahme |
| 1510 Funkschaltung | 293 Hauptteil |
| 1521 RFID-Chip | 294 Kopf |
| 1522 Dipolantenne | 295 Klappdeckel |
| 1540 Detektorschaltung | 296 Filmscharnier |
| 1542 Spannungsquelle | 297 Aussparung |
| 1544 Transistor (PNP) | 298 Rastzunge |
| 1546 LED | 299 Ausnehmung (im Quersteg 9) |
| 1550 Fototransistor (NPN) | |
| | |
| FIG.16-18 | FIG.21A-21B |
| 11 kritischer Bereich | 11 kritischer Bereich |
| 1610; 1710; 1810 | 211 Leitungsführungseinheit |
| Funkschaltung | 210 RFID-Tag |
| 1621A RFID-Chip | 217 Segment |
| 1621B RFID-Chip | 219 Filmscharnier |
| 1622; 1722; 1822 Antenne | W Verschleißgrenze |
| 1623 Übertragungsleitung | |
| 1626 Detektorelement | |
| 1627 Stichleitung | |
| W Verschleißgrenze | |
| | |
| FIG.19A-19B | |
| 190 Erkennungsmodul | |
| 191 Gehäuse | |
| 192 Aufnahme | |
| 193A männlicher Verbinder | |
| 193B weiblicher Verbinder | |

## Patentansprüche

1. Energieführungskette (1) mit elektrischer Verschleißerkennung, wobei die Energieführungskette eine Anzahl Kettenglieder (7) umfasst, welche einen Kanal bilden zur geschützten Führung von Leitungen, wie Kabeln, Schläuchen oder dergleichen, zwischen einem ersten Anschlussende (6) und einem dazu relativbeweglichen zweiten Anschlussende (5), wobei benachbarte Kettenglieder (7) in Längsrichtung jeweils gelenkig oder durch eine flexible Verbindung miteinander verbunden sind, die Energieführungskette umfassend eine Vorrichtung zur Erkennung von Verschleiß in einem kritischen Bereich (11) mindestens eines Kettenglieds (7), z.B. durch Abnutzung, Rissbildung und/oder Ermüdungsbruch,
**dadurch gekennzeichnet,**
**dass** die Vorrichtung (10) eine Funkschaltung (20, 20A, 20B; 1220; 1320...) und mindestens ein mit der Funkschaltung zusammenwirkendes Detektorelement (26; 1226, 1227; 1626) aufweist und dass die Funkschaltung und das zusammenwirkende Detektorelement integriert sind in ein Erkennungsmodul (100; 190; 200) zum Aus- bzw. Nachrüsten einer Energieführungskette (1) das an dem mindestens einen Kettenglied befestigt ist, wobei das Detektorelement bei einem vorbestimmten Ausmaß von Verschleiß im kritischen Bereich (11) das Verhalten der Funkschaltung ändert, sodass diese verschleißbedingte Änderung drahtlos erkennbar ist.

2. Energieführungskette nach Anspruch 1, **dadurch gekennzeichnet, dass** eine Anzahl Kettenglieder (7) in einem verschleißanfälligen Längsabschnitt der Energieführungskette jeweils mindestens ein Erkennungsmodul (100; 190; 200) aufweisen.

3. Energieführungskette nach Anspruch 1 oder 2, **dadurch gekennzeichnet, dass** das Detektorelement (26; 1226, 1227; 1626) als Leitungsabschnitt einer Detektorleitung (24; 1627) ausgeführt ist, der im kritischen Bereich verläuft und bei dem vorbestimmten Ausmaß von Verschleiß unterbrochen wird.

4. Energieführungskette nach Anspruch 1 oder 2, **dadurch gekennzeichnet, dass** die Funkschaltung ein Transponder ist (20) der eine Antenne (22; 122) umfasst, welche vorzugsweise als Induktionsspule (22; 122) oder als Dipolantenne (1322; 1422; 1522) ausgeführt ist,
- wobei das Detektorelement als ein Teil der Antenne ausgeführt ist, der im kritischen Bereich verläuft und bei dem vorbestimmten Ausmaß von Verschleiß unterbrochen wird; oder
- wobei Antenne (22; 122) über das Detektorelement (26) kurzgeschlossen ist und dass das Detektorelement (26) bei dem vorbestimmten Ausmaß von Verschleiß den Kurzschluss öffnet.

5. Energieführungskette nach einem der Ansprüche 1 bis 4, **dadurch gekennzeichnet, dass** die Funkschaltung
- als passiver RFID-Transponder (20, 20A, 20B; 1220; 1320...) ausgeführt ist, mit einem Mikrochip (21) der eine Identifikationsinformation speichert; oder
- als aktiver RFID-Transponder (1510) ausgeführt ist, mit einem Mikrochip (1521) der eine Identifikationsinformation speichert; oder
- als passiver 1-bit-Transponder (20; 20A, 20B) ausgeführt ist, vorzugsweise mit einem LC-Schwingkreis als Antenne für das Radiofrequenz-Verfahren.

6. Energieführungskette nach Anspruch 1, **dadurch gekennzeichnet, dass** die Kettenglieder (7)
- jeweils gegenüberliegende Seitenlaschen (8) umfassen, zumindest einige der Kettenglieder mindestens einen die Seitenlaschen verbindenden Quersteg (9) aufweisen, und das Detektorelement (26) an einer verschleißanfälligen Schmalseite einer Seitenlasche (8) angebracht ist; oder
- jeweils ein einstückig hergestelltes Segment (217) umfassen, wobei benachbarte Segmente (217) in Längsrichtung einen Kanal bilden zur geschützten Führung von Leitungen und jeweils durch eine flexible Verbindung (219) miteinander verbunden sind.

7. Energieführungskette nach einem der Ansprüche 1 bis 6, insbesondere nach Anspruch 6, **dadurch gekennzeichnet, dass** das Erkennungsmodul (100; 190; 200) mit einem Verbinder am Kettenglied (7) zur mechanischen Befestigung zusammenwirkt, insbesondere mit einem Verbinder für einen Quersteg an einer Seitenlasche des Kettenglieds (7).

8. Energieführungskette nach einem der vorstehenden Ansprüche, **dadurch gekennzeichnet, dass** mehrere Detektorelemente (26; 1226, 1227; 1626) jeweils in kritischen Bereichen (11) an einem Kettenglied angeordnet sind und mit einer gemeinsamen Funkschaltung, vorzugsweise einem RFID-Transponder, mit Mikrochip zusammenwirken.

9. Energieführungskette nach einem der Ansprüche 1 bis 8, **dadurch gekennzeichnet, dass** das Detektorelement (26; 1226, 1227; 1626) als passive Schaltungskomponente bzw. als Leiterabschnitt ausgeführt ist und mit einer gemeinsamen Funkschaltung, vorzugsweise einem RFID-Transponder, mit Mikrochip zusammenwirkt.

10. Energieführungskette nach einem der Ansprüche 1 bis 9, **dadurch gekennzeichnet, dass** die Kettenglieder jeweils im kritischen Bereich (11) eine Sollbruchstelle aufweisen, die bei dem vorbestimmten Ausmaß von Verschleiß das Detektorelement auslösen, wobei das Detektorelement (26; 1226, 1227) vorzugsweise als elektromechanisches oder elektronisches (1330) Schaltmittel ausgeführt ist.

11. Energieführungskette nach einem der Ansprüche 1 bis 10, **dadurch gekennzeichnet, dass** die Energieführungskette mit einem Untertrum (3) und einem demgegenüber gleitenden oder freitragenden Obertrum (4) ausgeführt ist und das Erkennungsmodul(100; 190; 200) in einem Teilabschnitt des Obertrums (3) angeordnet ist.

12. Erkennungsmodul (100; 190; 200) zum Aus- bzw. Nachrüsten einer Leitungsführung (1) mit elektrotechnischer Verschleißerkennung, umfassend eine Funkschaltung (20, 20A, 20B; 1220; 1320...), die eine Antenne und ein Detektorelement (26) aufweist, und ein Gehäuse (192; 292), insbesondere aus Kunststoff, das mit der Leitungsführung (1) zusammenwirkende Befestigungsmittel (193A, 193B; 293, 298) aufweist, um das Erkennungsmodul (100; 190; 200) an der Leitungsführung (1) zu befestigen, wobei das Gehäuse so gestaltet ist, dass ein Bereich des Gehäuses mit dem Detektorelement (26) einem in Bezug auf Verschleiß kritischen Bereich (11) ausgesetzt ist, wobei die Befestigungsmittel (193A, 193B; 293, 298) vorzugsweise mit Querstegen (9) oder deren Verbinder an Seitenlaschen (8) zusammenwirken.

13. Erkennungsmodul nach Anspruch 12 **gekennzeichnet, durch** eine zweiteilige Funkschaltung (10), welche einen Transponder (20, 20A, 20B; 1220; 1320...) umfasst, mit einem starren ersten Schaltungsteil (10A) und einem flexiblen zweiten Schaltungsteil (10B), in welchem das Detektorelement (26) vorgesehen ist.

14. Erkennungsmodul nach Anspruch 12, **dadurch gekennzeichnet, dass** die Funkschaltung (10) als aktive Funkschaltung (10) mit einem Mikrochip ausgeführt ist.

15. Verwendung eines Erkennungsmoduls (100; 190; 200) nach Anspruch 12, 13 oder 14 zur elektrotechnischen Erkennung von Verschleiß in einem kritischen Bereich einer verfahrbaren Leitungsführung (1; 221), insbesondere von Verschleiß durch Abnutzung, Rissbildung und/oder Ermüdungsbruch,
wobei sich bei einem vorbestimmten Ausmaß von Verschleiß das Verhalten der an der Leitungsführung (1; 221) angeordneten Funkschaltung (20, 20A, 20B; 1220; 1320...) ändert und ein Lesegerät (12) bzw. Transceiver diese Änderung drahtlos erfasst zwecks Auslösen einer Wartungsmeldung und/oder eines Notstopps.

## Claims

1. An energy guiding chain (1) having electrical detection of deterioration, wherein the energy guiding chain includes a number of chain links (7) forming a passage for protectedly guiding lines like cables, hoses or the like, between a first connection end (6) and a second connection end (5) moveable relative thereto, wherein adjacent chain links (7) are respectively connected together in the longitudinal direction hingedly or by a flexible connection, the energy guiding chain including an apparatus for detecting deterioration wear in a critical region (11) of at least one chain link (7), for example due to abrasion wear, cracking and/or fatigue breakage,
**characterised in that**
the apparatus (10) has a radio circuit (20, 20A, 20B; 1220; 1320...) and at least one detector element (26; 1226, 1227; 1626), which cooperates with the radio circuit, and **in that** the radio circuit and the cooperating detector element are integrated in a detection module (100; 190; 200) for original fitment or retro-fitment to an energy guiding chain (1) and which is fixed to the at least one chain link, wherein the detector element changes the behaviour of the radio circuit at a predetermined amount of wear in the critical region (11) so that that change due to deterioration wear can be wirelessly detected.

2. An energy guiding chain according to claim 1, **characterised in that** a number of chain links (7) in a wear-susceptible longitudinal portion of the energy guiding chain respectively have at least one detection module (100; 190; 200).

3. An energy guiding chain according to claim 1 or 2, **characterised in that** the detector element (26; 1226, 1227; 1626) is in the form of a line portion of a detector line (24; 1627) which extends in the critical region and which is interrupted at the predetermined amount of deterioration wear.

4. An energy guiding chain according to claim 1 or 2, **characterised in that** the radio circuit is a transponder (20) that includes an antenna, which preferably is in the form of an induction coil (22; 122) or in the form of a dipole antenna (1322; 1422; 1522),
- wherein the detector element is in the form of a part of the antenna which extends in the critical region and which is interrupted at the predetermined amount of deterioration wear; or
- wherein the antenna (22; 122) is short-circuited by way of the detector element (26) and that the detector element (26) opens the short-circuit at the predetermined amount of deterioration wear.

5. An energy guiding chain according to one of claims 1 to 4, **characterised in that** the radio circuit is
- in the form of a passive RFID transponder (20, 20A, 20B; 1220; 1320...) with a microchip (21) which stores identification information; or
- in the form of an active RFID transponder (1510) having a microchip (1521) which stores identification information; or
- in the form of a passive 1-bit transponder, preferably with an LC oscillating circuit as the antenna for the radio frequency method.

6. An energy guiding chain according to claim 1, **characterised in that** the chain links (7)
- each include oppositely disposed side plates (8), at least some of the chain links have at least one transverse leg (9) connecting the side plates, and the detector element (26) is mounted to a wear-susceptible narrow side of a side plate (8), or
- each include a segment (217) that is produced in one piece, wherein adjacent segments (217) form a passage in the longitudinal direction for protectedly guiding lines and are respectively connected together by a flexible connection (219) .

7. An energy guiding chain according to one of the claims 1 to 6, in particular according to claim 6, **characterised in that** the detection module (100; 190; 200) cooperates with a connector on the chain link (7) for mechanical fixing, in particular with a connector for a transverse leg on a side plate of the chain link (7).

8. An energy guiding chain according to one of the preceding claims, **characterised in that** a plurality of detector elements (26; 1226, 1227; 1626) are respectively arranged in critical regions (11) on a chain link and cooperate with a common radio circuit, preferably an RFID transponder, with a microchip.

9. An energy guiding chain according to one of claims 1 to 8, **characterised in that** the detector element (26; 1226, 1227; 1626) is in the form of a passive circuit component or in the form of a conductor portion and cooperates with a common radio circuit, preferably an RFID transponder, with a microchip.

10. An energy guiding chain according to one of claims 1 to 9, **characterised in that** the chain links respectively have in the critical region (11) a predetermined breaking point which triggers the detector element at the predetermined amount of wear, wherein the detector element (26; 1226, 1227) is preferably in the form of an electromechanical or electronic (1330) switching device.

11. An energy guiding chain according to one of claims 1 to 10, **characterised in that** the energy guiding chain has a lower run (3) and an upper run (4) which is slidable in relation thereto or which is self-supporting and the detection module (100; 190; 200) is arranged in a portion of the upper run (3).

12. A detection module (100; 190; 200) for original fitment or retro-fitment to a line guide (1) with electrical detection of deterioration, including a radio circuit (20, 20A, 20B; 1220; 1320...) having an antenna and a detector element (26), and a housing (192; 292), in particular of plastic, having fixing members (193A, 193B; 293, 298) cooperating with the line guide (1) to fix the detection module (100; 190; 200) to the line guide (1), wherein the housing is of such a configuration that a region of the housing with the detector element (26) is exposed to a region (11) which is critical in relation to deterioration wear, wherein the fixing members (193A, 193B; 293, 298) preferably cooperate with transverse legs (9) or connectors thereof on side plates (8).

13. A detection module according to claim 12, **characterised by** a two-part radio circuit (10) which includes a transponder (20, 20A, 20B; 1220; 1320...), with a rigid first circuit portion (10A) and a flexible second circuit portion (10B) in which the detector element (26) is provided.

14. A detection module according to claim 12, **characterised in that** the radio circuit (10) comprises a microchip and is an active radio circuit (10).

15. Use of a detection module (100; 190; 200) according to claim 12, 13 or 14 for electrically detecting deterioration in a critical region of a displaceable line guide (1; 221), in particular deterioration due to abrasion wear, cracking and/or fatigue breakage,
wherein at a predetermined amount of deterioration wear the behaviour of a radio circuit (20, 20A, 20B; 1220; 1320...) arranged at the line guide (1; 221) changes and a reading device (12) or transceiver wirelessly detects said change for the purposes of triggering a maintenance message and/or an emergency stop.

## Revendications

1. Chaîne de guidage d'énergie (1) ayant une détection électrique d'usure, dans laquelle la chaîne de guidage d'énergie comprend un certain nombre de maillons de chaîne (7) formant un passage pour guider de manière protégée des lignes telles que des câbles, des tuyaux ou similaires, entre une première extrémité de connexion (6) et une seconde extrémité de connexion (5) mobile par rapport à la première, dans laquelle des maillons de chaîne (7) adjacents sont respectivement reliés entre eux dans la direction longitudinale de manière articulée ou par une liaison flexible, la chaîne de guidage d'énergie comprenant un dispositif pour détecter une usure dans une zone critique (11) d'au moins un maillon de chaîne (7), par exemple due à l'usure par abrasion, à la fissuration et/ou à la rupture par fatigue,
**caractérisé en ce que**
le dispositif (10) comporte un circuit radio (20, 20A, 20B; 1220; 1320...) et au moins un élément de détection (26; 1226, 1227; 1626), qui coopère avec le circuit radio, et **en ce que** le circuit radio et l'élément de détection coopérant sont intégrés dans un module de détection (100; 190; 200), qui est conçu pour un montage d'origine ou un montage ultérieur sur une chaîne de guidage d'énergie (1) et qui est fixé à l'au moins un maillon de la chaîne, l'élément de détection modifiant le comportement du circuit radio en cas d'un degré prédéterminé d'usure dans la zone critique (11), de sorte que cette modification due à l'usure peut être détectée sans fil.

2. Chaîne de guidage d'énergie selon la revendication 1, **caractérisée en ce qu'**un certain nombre de maillons de chaîne (7) situés dans une partie longitudinale sensible à l'usure de la chaîne de guidage d'énergie présentent respectivement au moins un module de détection (100; 190; 200).

3. Chaîne de guidage d'énergie selon la revendication 1 ou 2, **caractérisée en ce que** l'élément de détection (26; 1226, 1227; 1626) est réalisé sous la forme d'une partie de conducteur d'un conducteur de détection (24; 1627) qui s'étend dans la zone critique et qui est interrompue en cas du degré prédéterminé d'usure .

4. Chaîne de guidage d'énergie selon la revendication 1 ou 2, **caractérisée en ce que** le circuit radio est un transpondeur (20) qui comprend une antenne, qui est de préférence sous la forme d'une bobine d'induction (22; 122) ou sous la forme d'une antenne dipôle (1322; 1422; 1522),
- dans lequel l'élément de détection se présente sous la forme d'une partie de l'antenne qui s'étend dans la région critique et qui est interrompue en cas du degré prédéterminé d'usure ; ou
- dans lequel l'antenne (22; 122) est court-circuitée par l'intermédiaire de l'élément de détection (26) et que l'élément de détection (26) ouvre le court-circuit en cas du degré prédéterminé d'usure.

5. Chaîne de guidage d'énergie selon l'une des revendications 1 à 4, **caractérisée en ce que** le circuit radio est configuré
- sous la forme d'un transpondeur RFID passif (20, 20A, 20B; 1220; 1320...) avec une micropuce (21) qui stocke des informations d'identification; ou
- sous la forme d'un transpondeur RFID actif (1510) doté d'une micropuce (1521) qui stocke des informations d'identification; ou
- sous la forme d'un transpondeur passif du type binaire, de préférence avec un circuit oscillant LC comme antenne pour la méthode de radiofréquence.

6. Chaîne de guidage d'énergie selon la revendication 1, **caractérisée en ce que** les maillons de chaîne (7)
- comprennent chacune des plaques latérales (8) disposées de manière opposée, au moins certains des maillons de chaîne ont au moins une branche transversale (9) reliant les plaques latérales, et l'élément de détection (26) est monté sur un côté étroit d'une plaque latérale (8) qui est susceptible d'usure, ou
- comprennent chacun un segment (217) fabriqué d'une seule pièce, les segments adjacents (217) étant respectivement reliés entre eux par une liaison flexible (219) et formant un passage dans la direction longitudinale pour le guidage protégé des lignes.

7. Chaîne de guidage d'énergie selon l'une des revendications 1 à 6, en particulier selon la revendication 6, **caractérisée en ce que** le module de détection (100; 190; 200) coopère avec un connecteur sur le maillon de chaîne (7) pour la fixation mécanique, en particulier avec un connecteur pour une branche transversale prévu sur une plaque latérale du maillon de chaîne (7).

8. Chaîne de guidage d'énergie selon l'une des revendications précédentes, **caractérisée en ce que** plusieurs éléments de détection (26; 1226, 1227; 1626) sont respectivement disposés dans des zones critiques (11) sur un maillon de chaîne et coopèrent avec un circuit radio commun, de préférence un transpondeur RFID, avec une micropuce.

9. Chaîne de guidage d'énergie selon l'une des revendications 1 à 8, **caractérisée en ce que** l'élément de détection (26; 1226, 1227; 1626) est conçu sous la forme d'un composant de circuit passif ou sous la forme d'une partie d'un conducteur et coopère avec un circuit radio commun avec micropuce, de préférence un transpondeur RFID.

10. Chaîne de guidage d'énergie selon l'une des revendications 1 à 9, **caractérisée en ce que** les maillons de chaîne présentent chacun dans la zone critique (11) un point faible de rupture prévue qui déclenche l'élément de détection en cas du degré prédéterminé d'usure, l'élément de détection (26; 1226, 1227) étant de préférence sous la forme d'un dispositif de commutation électromécanique ou électronique (1330).

11. Chaîne de guidage d'énergie selon l'une des revendications 1 à 10, **caractérisée en ce que** la chaîne de guidage d'énergie présente un brin inférieur (3) et un brin supérieur (4), qui peut coulisser par rapport au brin inférieur ou qui est autoportant, et **en ce que** le module de détection (100; 190; 200) est disposé dans une partie du brin supérieur (3).

12. Module de détection (100; 190; 200) destiné au montage d'origine ou ultérieur sur un guide de ligne (1) avec détection électrique d'usure, comprenant un circuit radio (20, 20A, 20B; 1220; 1320...) ayant une antenne et un élément de détection (26), et un boîtier (192; 292), en particulier en matière plastique, ayant des éléments de fixation (193A, 193B; 293, 298) coopérant avec le guide de ligne (1) pour fixer le module de détection (100; 190; 200) au guide de ligne (1), le boîtier étant configuré de telle sorte qu'une zone du boîtier avec l'élément de détection (26) est exposée à une zone (11) qui est critique par rapport à l'usure, les éléments de fixation (193A, 193B; 293, 298) coopérant de préférence avec des pattes transversales (9) ou leurs connecteurs sur des plaques latérales (8).

13. Module de détection selon la revendication 12, **caractérisé par** un circuit radio en deux parties (10) qui comprend un transpondeur (20, 20A, 20B; 1220; 1320...), avec une première partie de circuit rigide (10A) et une deuxième partie de circuit flexible (10B) dans laquelle est prévu l'élément de détection (26).

14. Module de détection selon la revendication 12, **caractérisé en ce que** le circuit radio (10) est configuré comme circuit radio actif (10) et comprend une micropuce.

15. Utilisation d'un module de détection (100; 190; 200) selon la revendication 12, 13 ou 14 pour détecter électriquement une usure dans une zone critique d'un guide de ligne mobile (1; 221), en particulier une usure due à l'abrasion, à la fissuration et/ou à la rupture par fatigue,
dans lequel, en cas d'un degré prédéterminé d'usure, le comportement d'un circuit radio (20, 20A, 20B; 1220; 1320...), qui est disposé au niveau du guide de ligne (1; 221), change et un dispositif de lecture (12) ou un émetteur-récepteur détecte de manière sans fil ledit changement dans le but de déclencher un message de maintenance et/ou un arrêt d'urgence.
